(19) Europäisches Patentamt
European Patent Office
Office européen des brevets

(11) **EP 1 166 469 B1**

(12) **EUROPEAN PATENT SPECIFICATION**

(45) Date of publication and mention
of the grant of the patent:
**31.08.2005 Bulletin 2005/35**

(51) Int Cl.⁷: **H04B 10/00**, H04B 10/04

(21) Application number: **00905242.4**

(86) International application number:
**PCT/IL2000/000104**

(22) Date of filing: **20.02.2000**

(87) International publication number:
**WO 2000/054413 (14.09.2000 Gazette 2000/37)**

(54) **ATMOSPHERIC OPTICAL COMMUNICATION**

ATMOSPHÄRISCHE OPTISCHE ÜBERTRAGUNG

COMMUNICATION OPTIQUE ATMOSPHERIQUE

(84) Designated Contracting States:
**AT BE CH CY DE DK ES FI FR GB GR IE IT LI LU MC NL PT SE**

(30) Priority: **10.03.1999 US 123572 P**
**02.04.1999 US 127331 P**

(43) Date of publication of application:
**02.01.2002 Bulletin 2002/01**

(73) Proprietor: **Celerica Ltd.**
**Petach Tikva 49130 (IS)**

(72) Inventors:
• **HABER, Ilan, D.**
**51429 Benei Brak (IL)**

• **ADAR, Uri**
**30065 Kibbutz Yagur (IL)**

(74) Representative: **van Westenbrugge, Andries et al**
**Nederlandsch Octrooibureau**
**P.O. Box 29720**
**2502 LS The Hague (NL)**

(56) References cited:
US-A- 4 307 294    US-A- 4 960 315
US-A- 5 745 634    US-A- 5 786 923
US-A- 5 818 619    US-A- 5 859 725
US-A- 5 983 068

**Description**

This application claims the priority under 119(e) of US provisional applications 60/123,572, filed March 10, 1999, and 60/127,331, filed April 2, 1999.

## FIELD OF THE INVENTION

The present invention relates to optical communication networks and particularly to atmospheric optical communication networks.

## BACKGROUND OF THE INVENTION

Optical fibers are commonly used in communication networks to transfer light which carries data at high rates. Optical fibers are generally divided into two classes, namely multi-mode fibers and single-mode fibers. Multi-mode fibers have a relatively large core diameter of between 50-100 microns and are therefore relatively cheap. Multi-mode fibers, however, allow light signals passing through them (referred to as belonging to a multi-mode light beam) to propagate in a plurality of paths. The multi-mode propagation also involves dispersion such that multi-mode light beams can carry high-bandwidth information only for short distances of, for example, up to a few hundred meters. This distance shortens as the data rate increases. Single-mode fibers, on the other hand, have a core diameter of about 10 microns and allow light propagating through them (referred to as belonging to a single-mode light beam) to travel only along a single path. Therefore, single-mode fibers may be used for transmission of high bandwidth light beams, typically OC-3 to OC-192 (155Mhz - 10GHz), over long distances of hundreds of kilometers (long haul).

When a light beam is passed from a multi-mode fiber to a single-mode fiber, most of the power of the beam is lost as only a single mode of light passes through the single-mode fiber. In order to pass information from a multi-mode light beam to a single-mode light beam without substantial losses, the multi-mode light beam must be converted to electrical signals and then be regenerated into a single-mode beam.

Optical fibers may transfer a combined (multiple wavelengths) light beam which is formed of a plurality of monochrome light beams. Each of the component light beams usually carries separate data unrelated to the data on the light beams of the other wavelengths. In order to pass a combined light beam through an electrical regenerator, the combined beam is separated into the component, single wavelength beams, for example using suitable optical filters. Each component light beam is then separately regenerated by a respective regenerator and the regenerated beams are recombined.

U.S. patent 4,960,31 to Kostal et al., describes a system for bridging a break in an optical fiber network, by transmitting a beam of light through the atmosphere. The system comprises two transceivers which are placed at opposite ends of the break. Before transmission, the light from the beam is regenerated. The light is then emitted from an optical fiber, and is expanded and collimated using a proper lens. The receiver receives the light and using suitable optics passes the light into a multi-mode fiber. The light from the multi-mode fiber is then passed to an electrical regenerator which regenerates the light into a single-mode optical fiber.

A document titled "4x2.5 Gb/s 4.4 km WDM free-Space Optical Link at 1550 nm" to G. Nykolak et al., from Lucent Technologies, Post Deadline Proceedings of the Optical Fiber Conference (OFC 99), San Diego, February 1999, describes an experiment in which a plurality of light beams from optical fibers were transmitted through the atmosphere. Four light beams with different wavelengths, from four different light sources, were optically amplified and combined into a single light beam. The combined beam was transmitted through the atmosphere from three parallel optical antennas in order to reduce turbulence effects caused by the atmosphere. The light from the three parallel antennas was collected into a multi-mode optical fiber by a single receiving optical terminal. The received beam was passed to a multi-mode wavelength division multiplexing (WDM) demultiplexer which separates the received beam into a plurality of beams of separate wavelengths. Each of the beams was then passed to a respective electrical regenerator.

There exist other systems for transmitting light beams from optical fibers through the atmosphere, such as the systems of Astroterra Corporation, California and Jolt from Jerusalem Israel, which receive the transmitted signals directly into an electro-optical light detector without an intermediate optical fiber.

U.S. patent 5,777,768 to Korevaar, describes a laser link communication system in the atmosphere. The system transmits a plurality of parallel non-coherent laser beams such that they overlap in the far field. The parallel laser beams are received by a detector that translates the received beams into electrical signals. In one embodiment of the 5,777,768 patent, a single collimator is used both to transmit light beams from a plurality of lasers to the atmosphere and to lead light beams from the atmosphere onto a detector.

The existing systems for atmospheric transmission of light beams from optical fibers all require electrical processing (typically regeneration) of the received beam in order to provide a single mode-type signal. Such regeneration requires sophisticated and expensive apparatus and is therefore usually suggested for use in special circumstances and not for widespread use. Furthermore, for multi-wavelength beams, use of electrical regenerators requires separation of received signals into single-wavelength components before the regeneration. Such separation makes the apparatus even more expensive.

## SUMMARY OF THE INVENTION

An aspect of some preferred embodiments of the invention relates to an all-optical network for transmitting data-carrying light beams through the atmosphere. An all-optical network does not use non-optical apparatus for transporting the data. Specifically, all-optical networks do not perform optical to electrical conversions for transporting the data. It is noted that all-optical networks may form sub-networks of an larger network which is not entirely optical. The advantages of being all-optical are gained in such networks, in those parts which are all-optical.

The apparatus of an all-optical network is simpler than apparatus of networks which include conversion of optical beams into other data transmission forms. All-optical networks are independent of characteristics (e.g., modulation modes, wavelengths and data rates) of light beams transmitted therethrough, and do not need to be changed when such characteristics change. In addition, multi-wavelength light beams, e.g. WDM beams, are more easily handled by all-optical networks as there is no need to separate the different beams before each conversion and there is no need to regenerate each beam separately.

Optionally, an optical booster amplifies a light beam received by a transmitter before the light beam is transmitted through the atmosphere. Alternatively or additionally, an optical pre-amplifier amplifies the light beam received from the atmosphere before the light beam is passed to an output optical fiber. It is noted that for short distances an optical amplifier is not generally required.

An aspect of some preferred embodiments of the invention relates to removing fluctuations of beam intensity, introduced by the atmosphere, using an optical automatic gain control (AGC) unit. The AGC is required so that the light beam meets the standards of data-carrying light beams, and will allow extraction of the data using commercial data equipment, e.g., add drop multiplexers (ADM), line terminal equipment (LTEs), and cross-connects (CC).

In a preferred embodiment of the present invention, the optical AGC is implemented using an optical amplitude modifier, i.e., an optical amplifier and/or an optical attenuator, with a variable amplification and/or attenuation. The level of amplification/attenuation is preferably adjusted responsive to the readings of a detector which measures the amplitude of the data light beam. Alternatively or additionally to measuring the amplitude of the data light beam, a reference signal is coupled with the data light beam at the transmitter and the detector measures the amplitude of the reference signal. The level of amplification/attenuation is preferably set such that the amplitude of the beam output from the amplifier/attenuator is substantially constant.

Alternatively or additionally, an amplifier which does not distort light beams even when the amplifier is saturated, for example an erbium doped fiber amplifier (EDFA), is used for AGC. Preferably, a reference beam is combined to the light beam at the transmitter. The reference beam is preferably amplified or regenerated in the receiver to a level which saturates the EDFA, such that at the output of the EDFA the amplitude of the regenerated reference beam is constant. Preferably, the reference beam is separated from the data beam in the receiver, regenerated and then recombined with the data beam. As the reference beam suffers from the same fluctuations as the light beam carrying the data, the correction of the reference beam corrects also the data-carrying beam.

In some preferred embodiments of the invention, a single reference beam is used for both pan-and-tilt control and for AGC.

An aspect of some preferred embodiments of the invention relates to using a single collimator for transmitting a light beam from an optical fiber to the atmosphere and for receiving a light beam from the atmosphere into an optical fiber. Preferably, the receiving and transmitting are performed concurrently by the collimator. Preferably, the collimator receives the beam into the same fiber from which it transmits the light beam. In some preferred embodiments of the present invention, the transmitted light beam and the received light beam have different wavelengths.

An aspect of some preferred embodiments of the invention relates to using a single bi-directional optical amplifier to amplify a bi-directional light beam, i.e., two light beams in the same space propagating in opposite directions. Preferably, the bi-directional amplifier is used for short (e.g., 10-100 meters) and medium (e.g., 100-400 meters) range transmission, while for long range transmission (e.g., about 1 km) the bi-directional light beam is preferably separated into the unidirectional beams, and separate amplifiers are used for the separate direction beams. It is noted that the transmission distances are a function of atmospheric conditions and vary with the weather and data rates.

An aspect of some preferred embodiments of the invention relates to an optical communication network which includes a plurality of segments in which light beams are transmitted through the atmosphere. Such a network is particularly useful in metropolitan areas in which laying fiber optics or other cables is very expensive. In a preferred embodiment of the present invention, the network allows forming different configurations of transmission paths by adjusting the positions and/or orientations of the transceivers used in transmitting light beams through the atmosphere.

In a preferred embodiment of the invention, the communication network is used in addition to a wired system to provide additional bandwidth in areas and/or at times of high bandwidth demand.

An aspect of some preferred embodiments of the invention relates to an atmospheric optical link which processes light beams of different characteristics using different apparatus. In a preferred embodiment of the present invention, beams which can be passed through the atmosphere without regeneration are passed through a first path using all-optical apparatus, while other beams are passed through regenerators before and/or after being transmitted through the atmosphere. The regenerators may be used for light beams of wavelengths which are not suitable for transmission through the atmosphere and/or for light beams with low data rates.

In a preferred embodiment of the present invention, a complex beam (e.g., a multi-wavelength beam) is split into primary beams (e.g., a single-wavelength beam), each of which is directed through suitable apparatus for transmission through the atmosphere, concurrently. Preferably, the primary beams which are processed using separate apparatus are transmitted through the atmosphere as a single complex beam. Preferably, the optical link can handle primary beams which are processed by one path while the other paths are idle, and complex beams which use some or all of the paths concurrently.

An aspect of some preferred embodiments of the invention relates to a network manager which controls the configuration of an optical network. Preferably, the manager receives information on the bandwidth needs of the network end users and on the current capabilities of the network and accordingly generates commands to the transceivers of the network. The capabilities of the network include, for example, the weather conditions, the operability of the transceivers and/or information on whether a free line of sight exists between two points. In a preferred embodiment of the present invention, the network includes one or more sensors which provide information on the capabilities of the network, such as video cameras and weather indicators. Preferably, telephone wires and/or wireless communication are used to transfer the information to the manager and send commands from the manager to the transceivers.

There is therefore provided in accordance with a preferred embodiment of the present invention, a method of transferring a data-carrying light beam, comprising transmitting the data-carrying light beam through the atmosphere, directing a received beam including at least a portion of the transmitted beam into a fiber, and variably changing the amplitude of the received beam, using optical apparatus. The changing of the amplitude comprises changing, by a variable amplification or attenuation, wherein at least some of the amplitude changes comprise attenuations.

Preferably, variably changing the amplitude includes changing by a factor determined responsive to an extent to which the received beam was affected by turbulation in the atmosphere. Preferably, variably changing the amplitude includes changing by a factor determined responsive to an average power level of the received beam.

Preferably, the method includes determining the momentary power of the received beam and wherein variably changing the amplitude of the received beam includes amplifying or reducing the amplitude by a factor determined responsive to the determined momentary power of the received beam. Preferably, determining the power of the received beam includes passing a portion of the received beam to a light detector.

Preferably, passing the portion of the received beam to the light detector includes passing a portion of the received beam after its amplitude is variably changed. Preferably, at least some of the amplitude changes have a variation rate higher than 1 kHz. Alternatively or additionally, a rate of change of the amplification level of the optical apparatus which performs the variable change is at least 1 kHz or at least 50 Hz. Preferably, variably changing the amplitude includes variably amplifying or attenuating by an optical amplifier. Alternatively or additionally, variably changing the amplitude includes variably attenuating by an optical attenuator. Preferably, the method includes additionally passing the received beam through an additional optical apparatus which changes the amplitude of the received beam. Preferably, variably changing the amplitude includes passing the received beam through a saturated optical amplifier. Preferably, passing the received beam through a saturated optical amplifier includes passing the received beam through an erbium doped fiber amplifier (EDFA). Preferably, transmitting the data-carrying light beam includes combining a reference beam to the data-carrying light beam and transmitting the combined beam.

Preferably, variably changing the amplitude includes changing by a factor determined responsive to an extent to which the reference beam was affected by turbulation in the atmosphere. Preferably, the reference beam and the data-carrying beam have substantially different electrical frequencies. Alternatively or additionally, the reference beam and the data-carrying beam have substantially different optical wavelengths. Preferably, the reference beam is used for adjusting the orientation of apparatus directing the received beam into the fiber.

Preferably, the method includes extracting at least a portion of the reference beam from the received beam and amplifying the extracted portion of the reference beam with a fixed amplification level, combining the amplified reference beam to the received beam, and passing the combined beam through a saturated optical amplifier. Preferably, amplifying with a fixed amplification level includes amplifying the reference beam such that the reference beam will saturate the optical amplifier. Preferably, amplifying the extracted beam includes regenerating the reference beam. Preferably, regenerating the reference beam includes regenerating the reference beam at a wavelength different from the wavelength of the received reference beam. Further preferably, regenerating the reference beam includes regenerating the reference beam at a wavelength different from any of the wavelengths of the data-carrying beam. Preferably, the reference beam and the data-carrying beam have substantially different optical wavelengths and wherein extracting the at least portion of the reference beam includes passing at least a portion of the received beam through a filter.

Preferably, the method includes variably changing the amplitude of an additional beam propagating in an opposite direction from the received beam, concurrently with variably changing the amplitude of the received beam. Preferably, variably changing the amplitude of the additional beam propagating is performed using the same apparatus as the changing of the amplitude of the received beam. Preferably, transmitting the light beam through the atmosphere includes transmitting outdoors. Preferably, transmitting the light beam through the atmosphere includes transmitting over a distance of at least 100 meters or at least 1000 meters.

## BRIEF DESCRIPTION OF THE DRAWINGS

The invention will be more clearly understood by reference to the following description of preferred embodiments thereof in conjunction with the figures, in which:

Fig. 1 is a schematic illustration of an atmospheric optical link, in accordance with a preferred embodiment of the invention;

Fig. 2 is a schematic illustration of a mechano-optic unit (MOU) for transmission of light beams through the atmosphere, in accordance with a preferred embodiment of the present invention;

Fig. 3A is a schematic illustration of the major elements of a beam processing unit, in accordance with a preferred embodiment of the present invention;

Fig. 3B is an exemplary schematic graph of the power of a light beam received from a typical turbulent atmosphere;

Fig. 4 is a schematic illustration of a single-direction optical link useful in understanding the operation of an optical pre-amplifier, in accordance with a preferred embodiment of the present invention;

Fig. 5 is a schematic illustration of a single-direction atmospheric optical link illustrating a method of optical AGC, in accordance with a preferred embodiment of the present invention;

Fig. 6 is a schematic block diagram of a fiber-electric unit, in accordance with a preferred embodiment of the present invention;

Fig. 7A is a schematic block diagram of the major parts of a beam processing unit, in accordance with another preferred embodiment of the present invention;

Fig. 7B is a schematic block diagram of the major parts of a beam processing unit, in accordance with still another preferred embodiment of the present invention;

Fig. 8 is a schematic block diagram of a single-direction atmospheric optical link, in accordance with a preferred embodiment of the present invention;

Fig. 9 is a schematic block diagram of a receiver of an atmospheric optical link, in accordance with a preferred embodiment of the present invention; and

Fig. 10 is a schematic illustration of an optical network, in accordance with a preferred embodiment of the present invention.

## DETAILED DESCRIPTION OF PREFERRED EMBODIMENTS

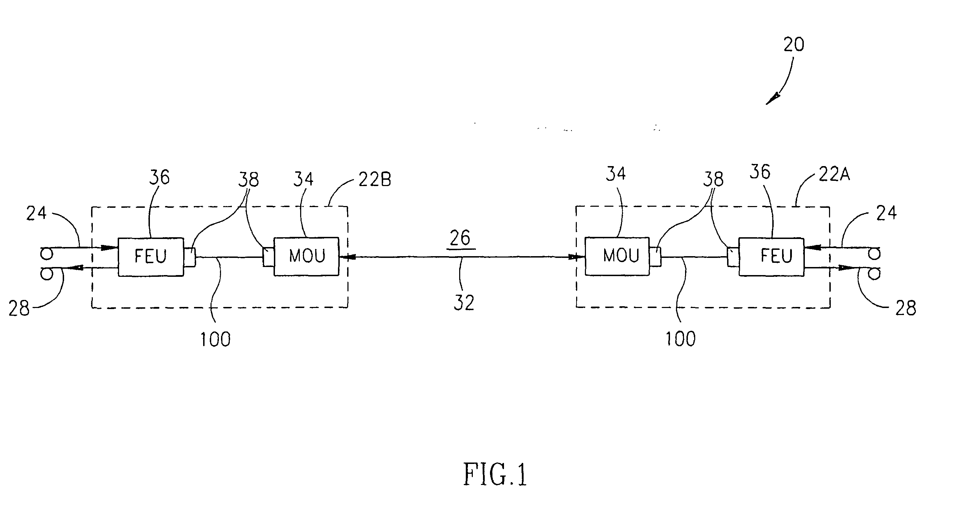

Fig. 1 is a schematic illustration of an atmospheric optical link 20, in accordance with a preferred embodiment of the invention. Optical link 20 comprises a pair of transceivers 22A and 22B which transmit to each other light beams through atmosphere 26, over a distance 32. Preferably, each transceiver 22A and 22B receives a light beam to be transmitted through atmosphere 26 from a transmission optical fiber 24 and passes a light beam received from atmosphere 26 to a reception optical fiber 28. In a preferred embodiment of the invention, the transmitted and received beams are transmitted and received concurrently using a single collimator in each of transceivers 22A and 22B.

Each of transceivers 22A and 22B preferably comprises a mechano-optic unit (MOU) 34, which performs the actual transmission and/or reception of a light beam to and from atmosphere 26, and a processing unit referred to herein as a Fiber electronic unit (FEU) 36.

In a preferred embodiment of the invention, a single fiber 100, preferably a single-mode fiber, connects between MOU 34 and FEU 36. MOU 34 preferably receives a light beam for transmission through fiber 100 and transmits the beam through atmosphere 26 and/or receives a light beam from atmosphere 26 and passes the received beam through the same fiber 100. Fiber connectors 38, such as APC and PC connectors, are preferably located at outlets of MOU 34 and FEU 36 which connect to fiber 100. Preferably, when fiber 100 passes light beams propagating in opposite directions, connectors 38 have a low return loss, i.e., less than -70 dB, so that return residue signals due to the connector are of negligible power relative to the beam power in the opposite direction.

Alternatively, MOU 34 is connected to FEU 36 through two fibers, preferably single mode fibers, which carry the transmitted beam and the received beam separately. In this alternative, return residue signals do not substantially interfere with the transfer of the data carried by the beam. In a preferred embodiment of the present invention, when the distance between MOU 34 and FEU 36 is relatively large, this alternative is used.

FEU 36 preferably performs pre-transmission and/or post-transmission adaptation of the beams transmitted and/or received by transceivers 22A and 22B. In a preferred embodiment of the invention, FEU 36 is removably attached to transceivers 22A and/or 22B, such that the FEU is easily replaced (e.g., upgraded).

The following description is primarily directed to transmission of data-carrying beams which carry data at high rates over substantial distances, i.e., at least 30, 50 or 100 meters, through outdoor atmospheric conditions. Such beam transmission is prone to atmospheric absorption (e.g., due to fog) and to turbulence which may cause power fluctuations (scintillations), beam wonder and large angles of arrival, which may substantially impede the quality of the transmitted beam.

Distance 32, over which light beams are transmitted through atmosphere 26, is preferably not longer than about 1000-1200 meters. It is noted, however, that the present invention is not limited to any specific distance 32. Specifically, a maximal distance 32 between transceivers 22A and 22B depends on weather conditions, visibility and the characteristics of the beam (e.g., wavelength, data rate).

Preferably, the light beam provided in reception optical fiber 28 is suitable for transferring through the fiber over substantial distances, i.e., at least about 50 meters, usually kilometers or even tens of kilometers, without amplification and/or regeneration.

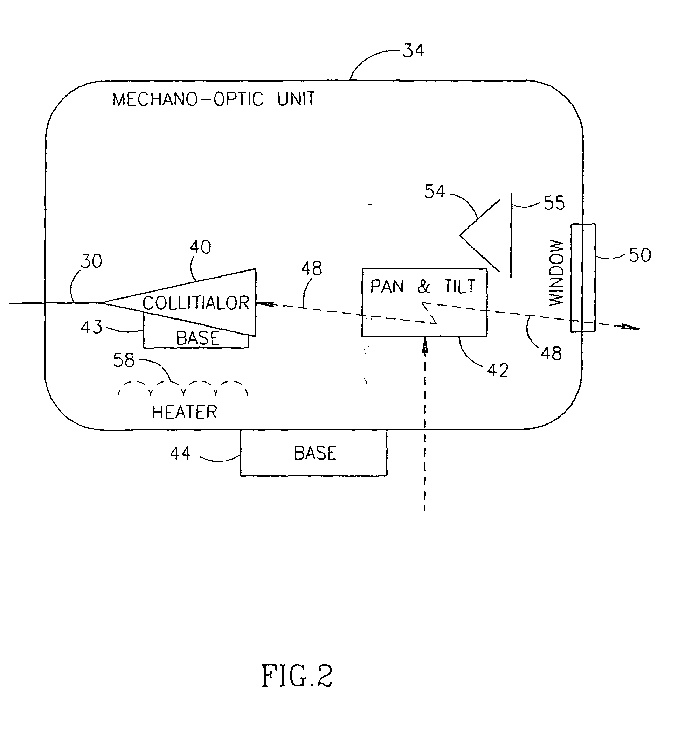

Fig. 2 is a schematic illustration of mechano-optic unit (MOU) 34, in accordance with a preferred embodiment of the present invention. A light beam 48 received from atmosphere 26 by MOU 34 is preferably passed to a fiber pigtailed collimator 40, or any other suitable collimator, which directs the light beam into a fiber 30.

Fibers 24 and 28 (Fig. 1), with which link 20 interacts with a fiber network, are preferably single-mode fibers. Using single-mode fibers allows transmission over many kilometers of light beams carrying data at very high data rates, such as 2.5 to 40 Gbps, and even more, without requiring regeneration which includes conversion of the beam into an electrical signal. By avoiding use of regeneration within link 20, the link may be used with an all-optical network which benefits from the advantages described hereinbelow of all-optical networks. Therefore, in some preferred embodiments of the invention, transceivers 22A and 22B pass the beams they receive from atmosphere 26 to fibers 28 without regenerating the beam. Preferably, fiber 100 comprises a single-mode fiber and all the apparatus of FEU 36 comprises single-mode apparatus. Single-mode optical apparatus is generally simpler, cheaper and less noisy.

In a preferred embodiment of the invention, Fiber 30 into which light is directed from the atmosphere 26 comprises a single-mode fiber which has a core diameter smaller than 30 microns, more preferably fiber 30 has a core diameter of about 10 microns or less. Fiber 30 may be of substantially any numerical aperture; in an exemplary embodiment an aperture of about 0.14 is used. Passing the light beam from atmosphere 26 directly into a single-mode fiber simplifies the apparatus of link 20 as there is no need to optically convert the received beam from multi-mode to single mode.

Alternatively to fiber 30 comprising a single mode fiber, fiber 30 comprises a short segment of a multi-mode fiber connected to a single mode fiber. Collimator 40 directs the light beam from the atmosphere into the multi-mode fiber. After passing the short multi-mode fiber segment, the beam is passed into the single-mode fiber. In passing into the single-mode fiber only a single mode of light from the multi-mode fiber enters the single-mode fiber and therefore the light beam loses most of its power. The beam within the single mode fiber, therefore, remains with a power of substantially the same amount as in the embodiment in which fiber 30 is entirely single-mode. The effective lens diameter of collimator 40 in this embodiment is, however, much larger, providing better immunity against atmospheric turbulation effects. Preferably, at the connection between the multi-mode fiber and the single mode fiber, the light in the multi-mode fiber is scrambled, for example by one or more twists in the multi mode fiber, to ensure substantially even distribution of the light power between the different light modes. Thus, the mode passed to the single-mode fiber has substantially the same amount of power as the rest of the modes.

The above described advantages of having link 20 provide single-mode light beams without performing regeneration are achieved at the cost of providing FEU 36 with a received beam of lower power than may be received using a multi-mode fiber as fiber 30 and regenerating the received beam. This is because the core diameter of a single-mode fiber is smaller than the core diameter of a multi-mode fiber, about by a factor of five, leading to a reception area ratio of about 25. Therefore, the received power of light beams led into single-mode light beams is smaller by a factor of about 25 than the power of light beams received into multi-mode fibers, which are immediately regenerated.

In a preferred embodiment of the invention, collimator 40 has a relatively small effective lens diameter, e.g., less than 10 centimeters, more preferably less than 5 centimeters, even more preferably between about 1-3 centimeters. In a preferred embodiment of the invention, the effective diameter of the lens of collimator 40 is about 14-15 mm. It is noted that in some preferred embodiments of the invention collimator 40 comprises a plurality of lenses forming composite lens. In these embodiments, the effective lens diameter refers to the composite lens. In an exemplary embodiment, collimator 40 has a 50 mm focal length lens. Preferably, collimator 40 comprises an aspheric lens and/or a Gradium lens so as to minimize aberration effects.

A large effective lens diameter facilitates gathering large amounts of light in receiving a beam from the atmosphere and therefore the power of the received beam increases with the size of the beam. Also, the effective diameter of the lens is inversely related to the divergence level of the transmitted beam. Therefore, the power of a beam transmitted from a large lens is more concentrated and therefore is more efficiently gathered by a receiver. On the other hand, too low a divergence level enhances the turbulation effects of the atmosphere. Furthermore, a low divergence level requires very accurate pan and tilt adjustments. In addition, a small collimator is more easily controlled in auto-tracking of the beam. In a preferred embodiment of the invention, the effective lens diameter of collimator 40 is chosen as a compromise between the above considerations according to weather conditions, auto-tracking requirements, and/or the space in which the collimator is to be mounted.

A suitable divergence level of collimator 40 is equivalent to a near ideal Gaussian beam divergence of about 0.2 mRad, and an output beam diameter of about 15mm at the lens plane. It is noted, however, that other divergence levels may be used according to the considerations described above.

In a preferred embodiment of the invention, a composite MOU 34 may operate with a plurality of different effective lens diameters. When the atmosphere causes high power-losses, a large effective lens diameter (with a small divergence) is preferably used, while when the atmosphere causes significant turbulation a collimator setup which causes a large divergence is preferably used. A large divergence collimator setup is preferably achieved by using a small effective lens diameter. Alternatively or additionally, a large divergence collimator setup is achieved by using an out of focus lens setup with a large effective lens diameter. In a preferred embodiment of the invention, different divergence extents are achieved with the same or different effective lens diameters using different focus adjustments. It is noted that the advantage of using an out of focus lens, i.e., a large divergence which is better immune to turbulation, is achieved at the price of a higher power loss due to the out of focus lens.

Preferably, a single collimator is used with one or more replaceable and/or adjustable lenses to achieve the different collimator setups. Alternatively or additionally, a plurality of different collimators are included in the composite MOU. Preferably, all the collimators are mounted on a single base allowing fast orientation of all the collimators together. Further alternatively or additionally, the composite MOU comprises a single composite zoom lens which has an adjustable lens size.

In a preferred embodiment of the invention, the composite MOU 34 is connected to a plurality of FEUs 36. When weather conditions allow, a plurality of the collimators of the composite MOU 34 are used concurrently, achieving a high bandwidth transmission. When the weather conditions are less favorable, only a single FEU 36 is used with the best suiting collimator of the composite MOU 34.

Collimator 40 preferably also enlarges a light beam received from fiber 30 and transmits the collimated beam into atmosphere 26. Preferably, when collimator 40 is used for both transmission and reception, the collimator has a low return loss, e.g., about -70 dB.

The parameters of collimator 40, e.g., the effective lens diameter and the divergence level, are preferably selected according to the transmission distance 32 and the weather conditions in a manner which ensures that the receiving transceiver receives the beam with a sufficient power level. Following is a description of the calculations of the losses of link 20 which is preferably used in selecting the parameters of collimator 40.

Each of transceivers 22A and 22B causes an internal loss of about 2-3 dB due to the optical devices used by the transceivers. The losses due to geometrical divergence of the beam in the atmosphere are described by equation 1:

$$L_g = -10\log\left[\left(\frac{D_{lens}}{D_{lens} + R \cdot \theta}\right)^2\right]$$

in which $L_g$ is the geometrical loss in dB, $D_{lens}$ is the effective lens diameter of collimator 40, R is the transmission distance 32 and θ is the divergence of the beam. For R= 1km, $D_{lens}$=14mm and θ=0.18mRad, $L_g$ is equal to about 22.9dB. Additional losses are caused by atmosphere absorption (between 0dB on a clear day and 30dB and more on a very foggy day) and atmosphere turbulence (up to 10dB on hot days). It is noted that the turbulence may also enhance the power of the beam (up to about 10dB) by converging the beam onto collimator 40. Usually, significant turbulence losses are caused only on days which have relatively low absorption losses, e.g., less than 10dB.

For an embodiment in which the light beam transmitted into the atmosphere has a power of about 10dBm and the received beam is extractable up to a power level as low as -40dBm, the total losses allowed by link 20 are about 50dB. The losses of link 20 are generally within these limits except when the atmosphere absorption exceeds 23dB. In normal locations such losses are rare and occur on less than 1% of the days. For days in which the atmosphere absorption is very high, smaller effective lens diameters and/or larger divergence levels are preferably used. Alternatively or additionally, in areas in which highly absorbing fog is common, stronger optical amplifiers and/or shorter transmission distances are used. These and other solutions are described in more detail further hereinbelow.

It is noted that in addition to the power losses due to atmospheric turbulence, the turbulence may cause beam deflection which will cause the beam not to be received at all. Therefore, as described above relatively large divergence levels of collimator 40 are preferably used, at least when the turbulence is high.

A pan and tilt module 42 preferably adjusts the orientation of transmitted and received beams 48 automatically. In a preferred embodiment of the present invention, in addition to, or instead of, pan and tilt module 42, collimator 40 is mounted on a movable base 43 which adjusts the orientation of the collimator. Alternatively or additionally, MOU 34 is mounted on a movable base 44 which is used to coarsely adjust the position and/or orientation of MOU 34. Preferably, bases 43 and/or 44 comprise automatically controlled motors which adjust the position and/or orientation of collimator 40 and/or MOU 34 without manual assistance.

In a preferred embodiment of the invention, pan and tilt module 42 and/or bases 43 and/or 44 can be used to set the gaze direction of collimator 40 to a wide range of directions, for example, 30, 180 or even 360 degrees in one or both axes. Possibly, base 44 comprises a plurality of pre-set angular positions. Alternatively, such pre-set directions are stored at a controller that controls the gaze direction to pre-set directions.

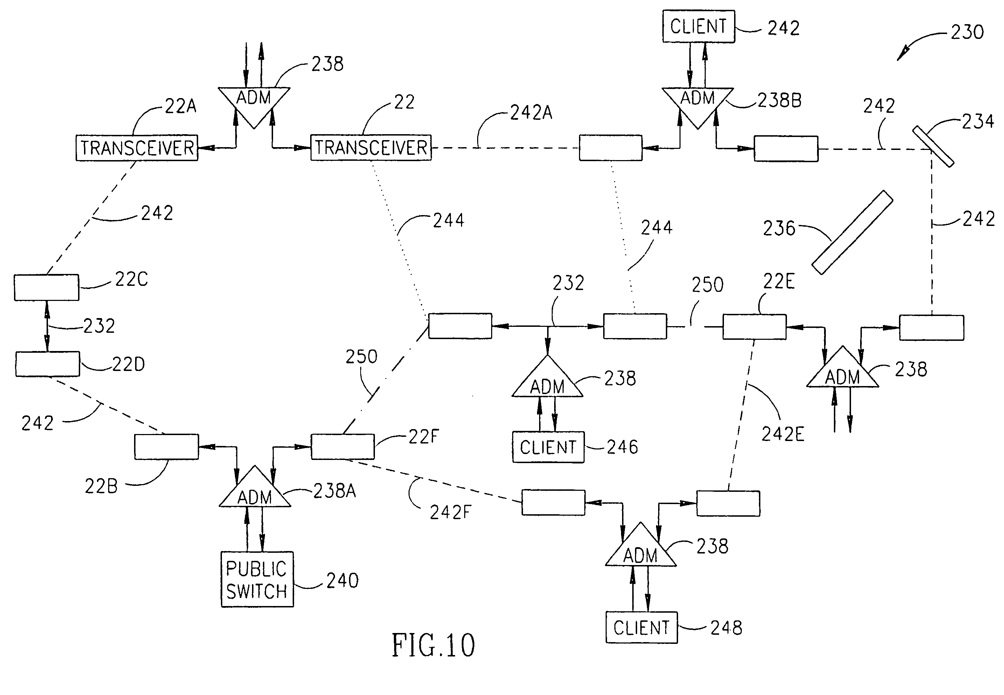

Alternatively or additionally, base 44 may be raised, lowered and/or otherwise moved in space, for example to avoid visual obstructions and/or to allow communication with a plurality of different transceivers which are not all in a free line of sight with a single position. Thus, as described hereinbelow with reference to Fig. 10, transceiver 22 may be used in networks having dynamic topologies.

In a preferred embodiment of the invention, a camera is provided on at least some of MOUs 34, to detect visual obstructions at or near the line of sight. Using suitable processing, some obstructions, such as moving birds, can be predicted, so that a network controller can take avoidance actions.

Preferably, the weight of collimator 40 mounted on movable base 43 is preferably less than 1 Kg, more preferably less than 200, 100, 50 and even 25 grams. Thus, the weight of movable base 43 may be made simple and/or its movements may be controlled more accurately. Further preferably, MOU 34 weighs less than 1-3 Kgs and/or requires a volume smaller than 10 litres or even 6 litres. In a preferred embodiment of the invention, MOU 34 fits into a cube smaller than 20 x 20 x 20 cm. Thus, base 44 may be very small and MOU 34 may be positioned in small areas where it is most convenient. For example, MOU 34 may be hanged from a ceiling, positioned within a small corner (e.g., on a roof edge), or on a small area surface.

In a preferred embodiment of the present invention, during the transmission of beam 48, the position and/or orientation of the beam is substantially continuously adjusted by pan and tilt module 42 and/or base 43, so as to optimize the reception of the received beam. Preferably, the adjustment is performed automatically using auto tracking methods, so as to maximize the power of the received beam 48. In a preferred embodiment of the invention, the auto tracking is performed responsive to the received data beam.

Alternatively or additionally, transceivers 22 combine, to transmitted data beams, a dedicated beam to be used in the auto-tracking. Preferably, when a dedicated beam is used, it is of a significantly different wavelength or polarization than the data-carrying beam so that it can be substantially loss-lessly separated from the data beam, if they use the same reception optics for detection.

In some preferred embodiments of the invention, MOU 34 comprises a retro-reflector 54, covered by a motorized shutter 55, which is used to adjust the orientation of an opposing MOU 34 which is entirely out of alignment. Retro-reflector 54 preferably comprises a small corner cube prism, such as, having a diameter of between about 20-80 mm, for example, 50 mm. Alternatively, a large corner cube prism of over 80 mm is used. Preferably, retro-reflector 54 reflects back, beams received over a wide range of angles, e.g., about 30 degrees.

Preferably, when two opposite MOUs 34 do not detect the beams of each other, they both open the motorized shutters 55 of their retro-reflectors 54 allowing each other to perform independent scanning and adjustment of their gaze direction. Preferably, after opening shutters 55, each of MOUs 34 scans for the opposite MOU by transmitting a beam in a two-dimensional pattern covering the area in which the opposite MOU is situated. When a reflection of the transmitted beam is received, the scanning MOU 34 records the scanning beam orientation for further use and preferably stops the scanning.

Thereafter, the MOU 34 which recorded the orientation waits for the opposite MOU 34 until it finishes scanning. When both the MOUs 34 have the correct orientations the transmission of data beam 48 preferably begins. At this point, shutters 55 are preferably closed so as not to interfere with the transmission. In a preferred embodiment of the invention, a predetermined time is set for adjusting the mutual orientation of the MOUs 34, e.g., three minutes, after which transmission of data beams begins under the assumption that both the MOUs 34 are properly oriented. Alternatively or additionally, opposite MOUs 34 utilize beams of one or more distinct characteristics such that each MOU can identify whether the beam it receives is its own or includes also a beam from the opposite MOU.

In a preferred embodiment of the invention, the scanning beam comprises the amplified spontaneous emission (ASE) of an optical amplifier or other apparatus of MOUs 34. Alternatively or additionally, the scanning beam comprises a reference beam generated by a LED or other optical source within FEU 36 or MOU 34, as described hereinbelow.

Preferably, the distinct characteristics of the scanning beams comprise different wavelengths and/or different electrical frequencies. Alternatively or additionally, the MOUs 34 turn the scanning beam on and off at a distinct rate.

In some preferred embodiments of the invention, in order to avoid detection of reflections from beams other than the scanning beam, such as beams from the sun, after detecting a reflection and recording the orientation MOU 34 switches off the scanning beam and checks whether the reflection disappears. If the reflection continues to be received, MOU 34 continues the scanning, ignoring the recorded orientation.

Alternatively or additionally, in order to avoid detection of other optical reflectors which happen to be in the vicinity of MOU 34, as being retro-reflector 54, the retro-reflector changes one or more characteristics of the scanning beam it receives. In a preferred embodiment of the invention, retro-reflector 54 comprises a chopper which constantly changes the power of the reflected beam at a predetermined rate. Preferably, the chopper does not entirely eliminate the reflected light, such that at all times at least some of the light impinging on retro-reflector 54 is reflected. This is to prevent cases in which the scanning passes retro-reflector 54 exactly when the chopper is closed. In a preferred embodiment of the present invention, the chopper comprises a 50/100 chopper. Alternatively or additionally, the scanning beam comprises a plurality of wavelengths and/or polarization modes and retro-reflector 54 absorbs some of the wavelengths and/or polarization modes.

The use of retro-reflector 54 allows relatively simple adjustment of the orientation of two MOUs 34 relative to each other, using small apparatus, even from positions in which MOUs 34 are totally out of coordination. The use of retro-reflectors 54 in MOUs 34 is especially advantageous in dynamic topology networks, described hereinbelow with reference to Fig. 10. In dynamic topology networks, MOUs 34 may often switch their pairings and therefore adjustment of the orientation of the MOUs from uncoordinated conditions may be performed frequently.

In a preferred embodiment of the invention, only one of a pair of MOUs has a dedicated beam generator and detector. Alternatively, both have a dedicated beam generator and detector. Further alternatively or additionally, both have a dedicated beam generator and detector but only one is operated. Alternatively or additionally, a detector is provided instead of retro-reflector 54. Alternatively, many optical alignment mechanisms are known in the art and may be used for maintaining the relative alignment of two MOUs.

In a preferred embodiment of the invention, a filter is provided on retro-reflector 54, so only the scanning beam is reflected. Alternatively, a position sensitive detector (or an imaging array) may be used to detect small misalignments. Alternatively or additionally, retro-reflector 54 is used for tasks other than adjustment from out of alignment states, such as for intensity adjustment.

In a preferred embodiment of the invention, MOU 34 comprises an oblique window 50 which faces downwards, such that the window does not develop moisture and does not directly return light it receives in a manner which may blind other MOUs. In a preferred embodiment of the invention, a heater 58 regulates the temperature within MOU 34 in order to avoid condensation on window 50 and/or to prevent the temperature within MOU 34 from going beneath operational temperature levels of the apparatus of the MOU.

Preferably, MOU 34 (i.e., collimator 40 and pan and tilt module 42) may operate with a large span of optical beams with different characteristics including beams formed of one or a plurality of wavelengths (e.g., WDM beams), beams of various modulation modes, beams of various data rates and/or beams with various wavelengths. Thus, MOU 34 is substantially independent of the characteristics of the transmitted and/or received light beam and does not need to be altered or replaced when one or more characteristics of the light beams passed through link 20 change.

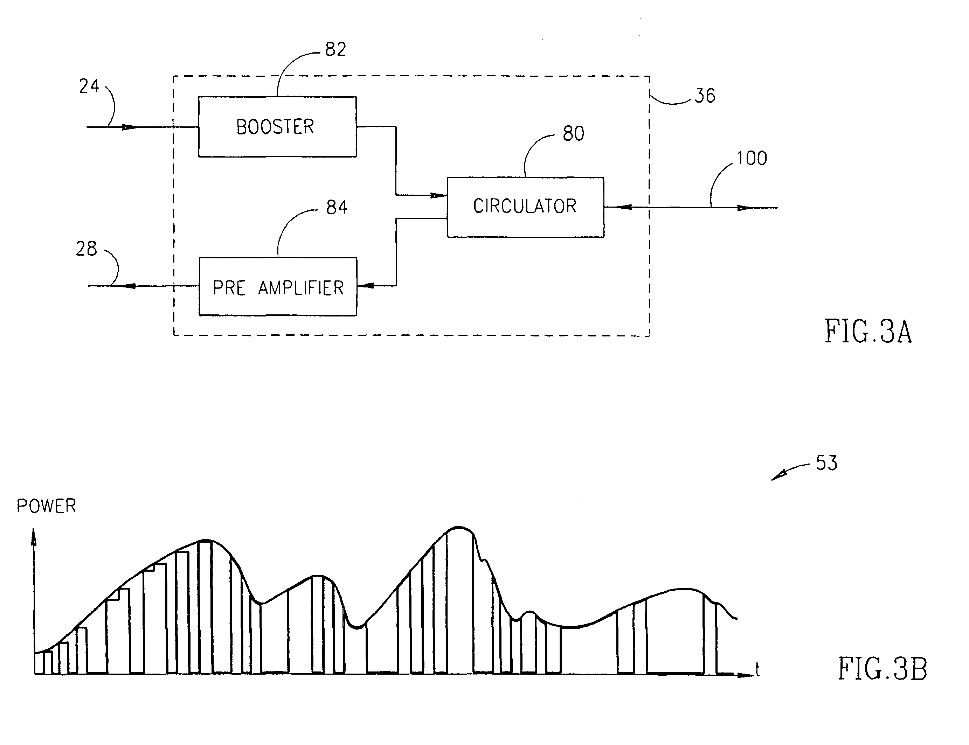

Fig. 3A is a schematic illustration of the major elements of FEU 36, in accordance with a preferred embodiment of the present invention. As described above, FEU 36 preferably receives a transmission light beam through transmission fiber 24 and passes a light beam received from atmosphere 26 (Fig. 1) through reception fiber 28. Preferably, a circulator 80 combines the beams on fibers 24 and 28 into a single beam passed on input/output fiber 100 from/to MOU 34. Alternatively, a splitter (e.g. a 50/50 coupler) which divides the beam into to separate beams which each has about half the power of the original beam, is used instead of circulator 80, resulting in a loss of about 3dB. Alternatively or additionally, circulator 80 is included in MOU 34 instead of being in FEU 36. In order to ensure that the transmission beam is transmitted with relatively high power, the beam is preferably amplified by an optical booster 82 before it is transmitted. In some preferred embodiments of the invention, a pre-amplifier 84 amplifies the received light beam before it is passed through reception fiber 28.

Preferably, pre-amplifier 84 and booster 82 can amplify light beams of a span of wavelengths, e.g., over a bandwidth of 40-50 nm or even more, in the range of wavelengths normally used for transmitting data signals. Thus, light beam 48 can include a plurality of wavelengths carrying different data, achieving transmission of data at a higher bandwidth than using only one wavelength. Preferably, pre-amplifier 84 and booster 82 can amplify beams with very high data rates. In a preferred embodiment of the invention, pre-amplifier 84 and booster 82 can handle any beam which can pass through fibers 24 and 28 and/or through standard LTEs. Alternatively, pre-amplifier 84 and booster 82 can handle beams with a bandwidth of up to at least about 80% or 90% of the bandwidth capabilities of standard LTEs.

In a preferred embodiment of the present invention, the extent to which booster 82 and/or pre-amplifier 84 amplify their beams depends on distance 32 and/or on weather conditions. Alternatively or additionally, the amplification extent of booster 82 and/or pre-amplifier 84 is controlled based on the average input power of the beams they receive.

In a preferred embodiment of the invention, booster 82 comprises a semi-conductor optical amplifier (SOA) or an erbium doped fiber amplifier (EDFA). Similarly, pre-amplifier 84 preferably comprises an SOA or an EDFA. It is noted, however, that substantially any other optical amplifiers may be used, such as Er/Yb amplifiers. Furthermore, as described hereinbelow, optical attenuators may be used instead of or in addition to booster 82 and/or pre-amplifier 84.

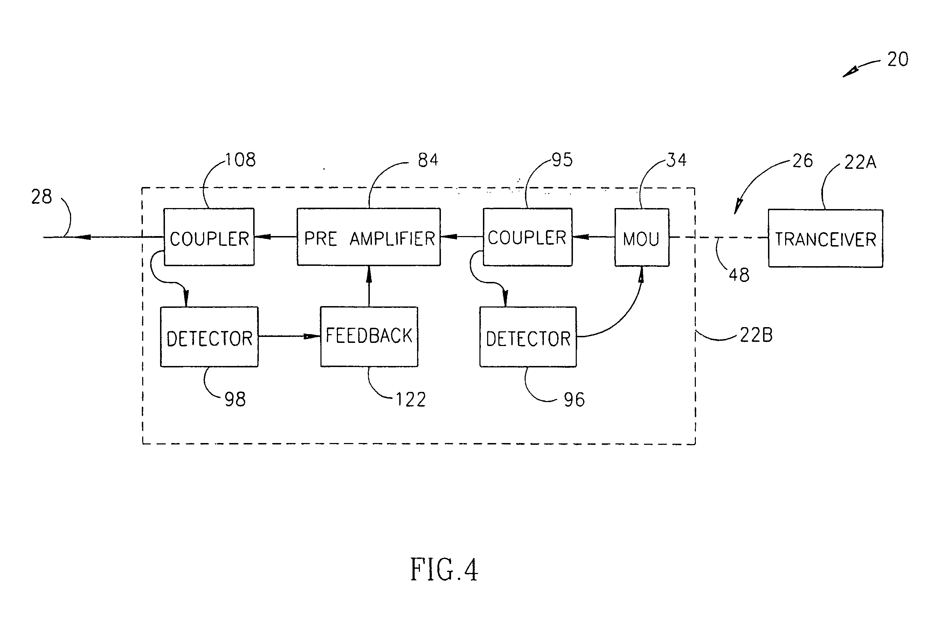

Fig. 4 is a schematic illustration of optical link 20, useful in understanding the operation of pre-amplifier 84, in accordance with a preferred embodiment of the present invention. Light beam 48, including a data signal of one or more wavelengths, is transmitted from transceiver 22A through atmosphere 26 to transceiver 22B. It is noted that, as described above, beam 48 may be a bi-directional beam. The following explanation, however, for simplicity, regards only to that part of light beam 48 transmitted from transceiver 22A to transceiver 22B. Preferably, pre-amplifier 84 of transceiver 22B receives light beam 48 and amplifies it to compensate for at least some of the power losses of the beam due to atmosphere absorption and/or beam divergence (i.e., geometrical losses). In a preferred embodiment of the invention, the extent of the amplification is the largest possible extent which does not degrade the beam to be unusable.

In addition to the general attenuation of the power of light beam 48 caused by atmosphere 26, the atmosphere causes a variable change of the power of the light beam. The variable changes are referred to herein as fluctuations. Fig. 3B is an exemplary schematic graph of the power of a light beam 53 received from the atmosphere. The difference between the highest and lowest power of the beam 53 is about 30dB and the rate of change of the attenuation is about up to 1 kHz.

Preferably, pre-amplifier 84 has a variable amplification level which is dynamically adjusted such that the output of the pre-amplifier has a substantially constant signal power. In a preferred embodiment of the invention, a coupler 108 passes a small portion (e.g., between 5% - 1%) of the output of pre-amplifier 84 to a detector 98 which determines the power of the output. A feedback circuit 122 preferably compares the determined power to a desired average power and accordingly the amplification level of pre-amplifier 84 is adjusted. Feedback circuit 122 may be of any type known in the art including open loop and closed loop control circuits.

Preferably, the desired average power is preferably set according to a long-term average of the power of received beam 48, such that the average amplification level of pre-amplifier 84 is in the middle of the dynamic range of the pre-amplifier. Alternatively, a predetermined fixed power level is used instead of the desired average power.

Thus, pre-amplifier 84 performs automatic gain control (AGC) of the signal it amplifies. The gain control compensates for the power fluctuations introduced into the signal by atmospheric turbulence. It is noted that the described AGC is performed with all-optical apparatus without performing any conversions of the data in beam 48 to an electrical form.

Preferably, the amplification level of pre-amplifier 84 may vary over a wide range allowing amplification of beam 48 to the desired average power even when the beam suffers from worst case variations in the amplitude due to turbulation in atmosphere 26. In a preferred embodiment of the invention, pre-amplifier 84 has a dynamic range of amplification of a factor of approximately 1000 between its lowest and its highest amplification (including attenuation) levels. In a preferred embodiment of the invention, an SOA which generally has a maximal amplification of about +20dB and a maximal attenuation of about -10dB is used to implement pre-amplifier 84.

Preferably, the frequency response of pre-amplifier 84 is large enough to compensate for most rates of change of the amplitude of signals passing through atmosphere 26, for example, at least about 1 kHz. Such rates of change may be achieved, for example, by an SOA. Alternatively or additionally, an optical amplifier with a lower rate of change, such as, an EDFA with a typical rate of change of about 100 Hz is used to implement pre-amplifier 84. Such optical amplifiers with low rates of change may be used in networks in which the LTEs and/or ADMs are tolerant to low levels of turbulence not corrected due to the low rate of change.

Preferably, a base amplification level of pre-amplifier 84 which is applied to signals least distorted by atmosphere 26, is set such that the pre-amplifier uses substantially its entire dynamic range. Thus, only when beam 48 suffers from extreme fluctuation levels, the fluctuations are not entirely corrected. In a preferred embodiment of the invention, when pre-amplifier 84 distorts the data signal when it saturates, e.g., when pre-amplifier 84 comprises an SOA, feedback circuit 122 truncates very high values such that the pre-amplifier never saturates. In such cases the fluctuations in light beam 48 are not entirely corrected.

Detector 98 preferably measures the peak to peak amplitude of an AC component of the data signals it receives while ignoring DC signals (and low frequency AC signals) which are generally due to ASE of pre-amplifier 84. In a preferred embodiment of the invention, detector 98 also ignores AC components which were not received from atmosphere 26 and/or are otherwise not required for the AGC. Alternatively or additionally, detector 98 comprises a narrow band filter which provides a measuring module of the detector only with electric frequencies of the data signals in beam 48. Further alternatively or additionally, an optical filter of a narrow band around the wavelength of the data beam is used to remove noise from the beam entering detector 98.

Alternatively to adjusting the amplification of pre-amplifier 84 based on the peak to peak amplitude of the data beam at the output of pre-amplifier 84, a reference signal is combined in transceiver 22A to signals being transmitted through atmosphere 26. The reference signal preferably has a predetermined frequency which is easily distinguished both from frequencies which commonly accumulate high levels of disturbance (e.g., DC) and from the frequencies at which the data of beam 48 is modulated. In a preferred embodiment of the invention, the reference signal has a relatively low data rate frequency, e.g., between about 20-200 kHz. The reference signal preferably has a signal power lower than the power of the data beam, so as not to interfere with LTEs receiving the light beam from link 20. On the other hand, the power of the reference signal is not too low such that it can be easily measured. In a preferred embodiment of the invention, the power of the reference signal is lower than the power of the data beam by a factor of between about 4-10. Detector 98 preferably measures only the amplitude of the reference signal and accordingly the amplification of pre-amplifier 84 is adjusted. As atmosphere 26 attenuates the data signal and the reference signal to the same extent, the fluctuations in the reference signal are accurately indicative of the fluctuations in the data signal.

In some preferred embodiments of the invention, transceiver 22B comprises a detector 96 (and a corresponding coupler 95) which measures the power of the beam received by MOU 34. The measurements of detector 96 are preferably used for the auto-tracking performed by MOU 34. Alternatively or additionally, the measurements of detector 96 i.e., of the data beam before it enters pre-amplifier 84, are used by feedback circuit 122 in addition to, or instead of, the measurements of detector 98. Further alternatively or additionally, coupler 95 and/or detector 96 are included in MOU 34. Thus, the auto-tracking is controlled independently by MOU 34 without relation to FEU 36.

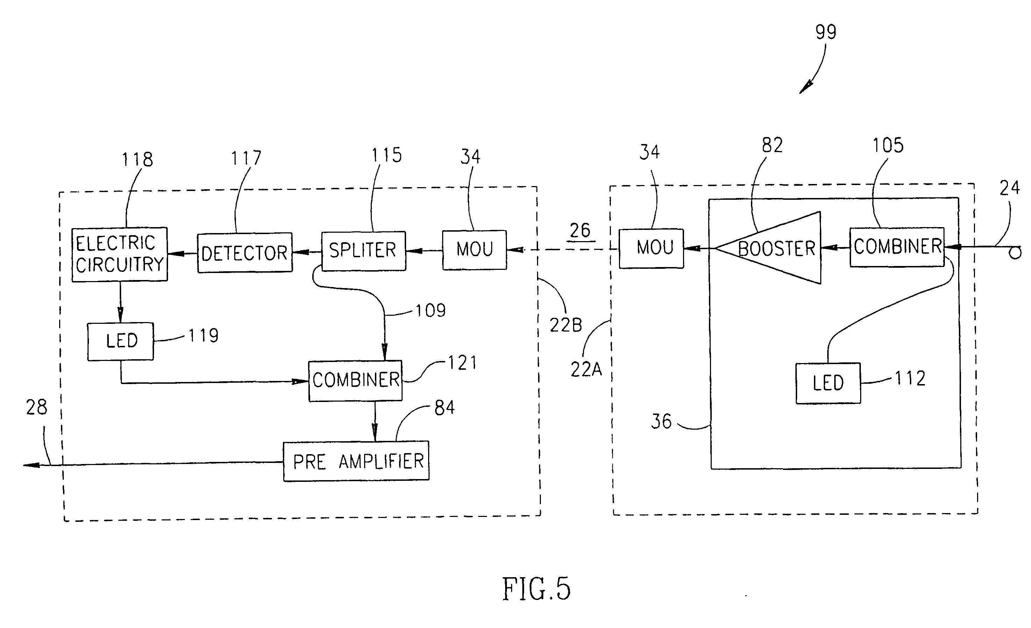

Fig. 5 is a schematic illustration of an optical link 99, useful in understanding the operation of pre-amplifier 84, in accordance with a preferred embodiment of the present invention. In this embodiment, pre-amplifier 84 preferably comprises an EDFA (or any other optical amplifier which does not distort data signals when it saturates) with a fixed predetermined amplification. It is noted, however, that when the EDFA receives a signal which if it is amplified by the fixed amplification level it will be above a saturation level of the EDFA, the received signal is amplified by a lower amplification level which brings the signal to the saturation level.

Preferably, transceiver 22A comprises a LED 112, or other light source (e.g., a laser diode), which generates a reference signal, as described above. The reference signal is preferably combined, by a combiner 105, with the data beam transmitted from transceiver 22A. Preferably, the LED signal is combined to the data beam before booster 82, such that the reference signal is also amplified, and a relatively low power LED may be used. Alternatively, combiner 105 is located after booster 82.

Transceiver 22B receives the beam and preferably passes it through a splitter 115 which passes a small fraction, e.g., 5-15% to a detector 117 which converts the small fraction beam into an electrical signal. The rest of the beam from splitter 115 is passed on a fiber 109 and is referred to as the data beam. The electrical signal is preferably filtered by electric circuitry 118 to extract only the reference signal, and the extracted reference signal is amplified. The amplified reference signal is preferably converted back to a light beam using a LED or other light source 119. The converted reference light beam is preferably recombined to the data beam from fiber 109 at a combiner 121. Electric circuitry 118 preferably amplifies the reference signal by a predetermined fixed amount, which is chosen such that the output of pre-amplifier 84 will always be at the saturation level. Thus, the reference signal is amplified by a varying amount which always brings it to a fixed level. Since the reference signal was distorted by atmosphere 26 in the same way the data signal was distorted, the fluctuations of the data signal are thus corrected by pre-amplifier 84.

Preferably, splitter 115 is implemented using a fused coupler and/or using a free-space beam splitter, as is known in the art. Alternatively or additionally when the reference beam has a distinct wavelength from the wavelength of the data beam, splitter 115 is implemented using a wavelength selective coupler (WSC) which has much lower loss rates relative to the fused coupler. Further alternatively or additionally, the WSC is replaced by a mirror for a specific wavelength and a circulator, as is known in the art.

It is noted that detector 117 may be a simple detector as it only needs to detect the reference signal which has a relatively low frequency, e.g., about 20-200 kHz, and not the data signal which has a very high data rate.

Alternatively to detector 117, circuitry 118 and light source 119, in some preferred embodiments in which the reference signal can be optically separated from the data beam, the small fraction from splitter 115 is passed to a filter which extracts the reference signal. The filtered reference signal is then amplified by an optical amplifier and recombined to the data beam at combiner 121. In a preferred embodiment of the invention, the reference signal has a different wavelength than the data beam and the filter which extracts the reference signal extracts signals having the wavelength of the reference signal. In this embodiment, a WSC or other filter is located after preamplifier 84, so as to clear the data beam provided by pre-amplifier 84 from the reference signal. Alternatively, the reference signal is combined in the opposite direction from the data beam.

Alternatively to using a reference signal, detector 117 detects the data beam itself. This alternative requires a more complex detector 117 but does not require LED 112 in transceiver 22A.

Further alternatively, the data beam received by transceiver 22B is directly fed into an EDFA with an amplification level high enough such that the data beam saturates the EDFA. Preferably, this alternative is used for relatively short distances 32 of transmission through atmosphere 26, such that the noise entered by the EDFA does not dominate the data beam. Alternatively or additionally, a two-stage EDFA is used with an intermediate band pass filter which at least partially removes the noise generated by the EDFA.

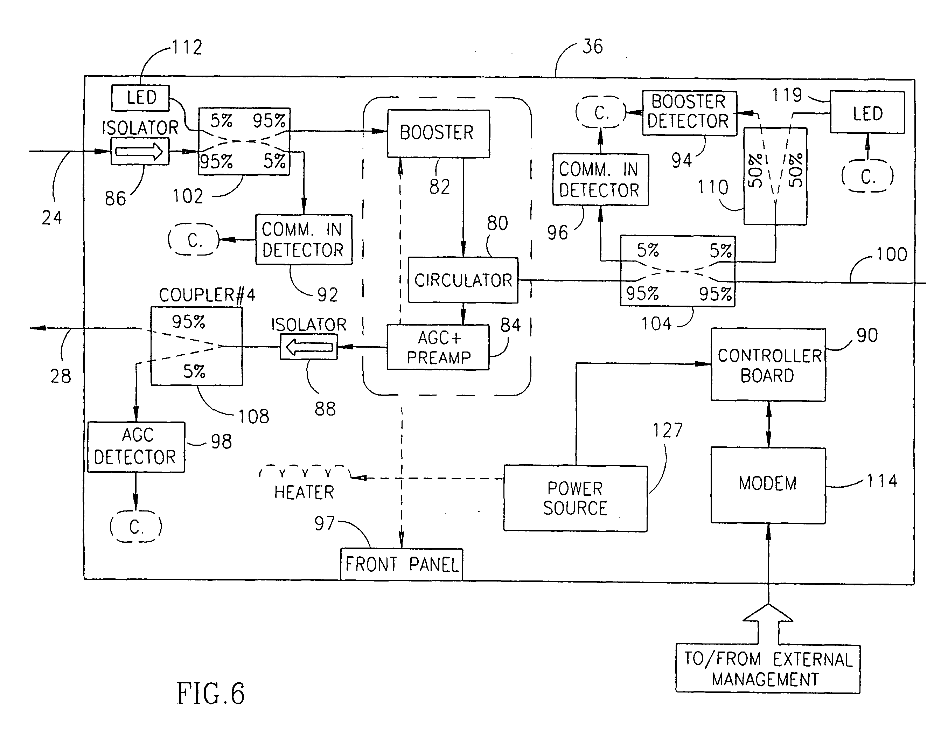

Fig. 6 is a schematic block diagram showing the details of FEU 36, in accordance with a preferred embodiment of the present invention. As described above, FEU 36 comprises circulator 80, booster 82 and pre-amplifier 84. In a preferred embodiment of the invention, an isolator 86 is placed on a light path leading from fiber 24 to booster 82 in order to prevent amplified spontaneous emission (ASE) signal return from the booster toward a source generating the beam received through fiber 24. Alternatively or additionally, an isolator 88 is positioned on a light path between pre-amplifier 84 and fiber 28 in order to prevent ASE and/or data signal return, back to the pre-amplifier.

In some preferred embodiments of the invention, FEU 36 comprises a controller 90 which controls the operation of the FEU, especially the amplification of booster 82 and/or amplifier 84. For example, controller 90 may perform the AGC in accordance with any of the methods described hereinabove.

Preferably, one or more light detectors provide controller 90 with indication on the operation of FEU 36. Alternatively or additionally, the indications are provided to humans on a front panel 97. Further alternatively or additionally, indications are provided to line terminal equipment (LTE) providing and/or receiving beams to/from FEU 36. The indications may be provided to the LTE directly from the detectors and/or may be processed and sent from controller 90.

In a preferred embodiment of the invention, FEU 36 comprises a communication-in detector 92 which measures the power of the beam received through fiber 24 from the LTE and a booster detector 94 which detects the power of the beam coming out of the booster. Similarly, detector 96 detects the light power of the signal going into pre-amplifier 84 and detector 98 detects the power of the signal coming out of the pre-amplifier. Preferably, a coupler 102 provides detector 92 a small portion (e.g., 1% - 5%) of the light beam entering booster 82. Similarly, coupler 108 provides detector 98 with a small portion of the light beam coming out of pre-amplifier 84.

A coupler 104 preferably provides a small portion of the light traveling on fiber 100 separately in each direction. The portion of the light entering pre-amplifier 84 is preferably provided to detector 96, and the portion from the light beam exiting booster 82 is provided to detector 94.

As described above, in a preferred embodiment of the invention, FEU 36 comprises a LED 112 (or other light source) which provides a reference signal which is used in monitoring the amplification of pre-amplifier 84, of an opposing FEU 36. Preferably, the reference signal from LED 112 is transmitted through atmosphere 26 together with the beam output from booster 82. In a preferred embodiment of the invention, the light from LED 112 is coupled with the data beam before the data beam enters booster 82. Alternatively or additionally, the reference signal is combined to the data signal after booster 82. In some preferred embodiments of the present invention, LED 112 is used for additional or alternative tasks than generating the reference signal. Alternatively or additionally, another LED, or other light source, is included in FEU 36, for example light source 119. The light from light source 119 is preferably combined to the light beam received from the atmosphere using coupler 104 and an additional coupler 110. The light from light source 119 is preferably used for saturation of preamplifier 84, as described above with reference to Fig. 5 and/or for open loop control of preamplifier 84.

In some preferred embodiments of the invention, controller 90 receives commands remotely from other FEUs and/or from a network manager. In a preferred embodiment of the invention, FEU 36 comprises a modem 114, or any other communication interface, which may be used to provide the commands to controller 90. Alternatively or additionally, modem 114 may be used to remotely receive feedback from controller 90.

In a preferred embodiment of the present invention, controller 90 controls the modules of MOU 34, i.e., pan and tilt module 42, bases 43 and/or 44, retro-reflector 54 and/or shutter 55. Alternatively or additionally, MOU 34 has a separate controller which is preferably connected to modem 114 and/or to controller 90. Alternatively or additionally, MOU 34 receives instructions directly from the network manager.

In a preferred embodiment of the invention, an electrical connection, or a separate optical connection, is used to pass commands from FEU 36, e.g., controller 90, to MOU 34. Alternatively or additionally, FEU 36 and MOU 34 communicate using a control light beam which is combined to the data beam. Preferably, control commands are modulated on to the control light beam at a relatively low data rate, e.g., about 2-50 kHz. Using a low data rate allows using relatively simple apparatus for generating and receiving the control beam.

The control beam preferably has a wavelength different from the wavelengths of the data beams passed through the FEU 36 and MOU 34. Further preferably, the wavelength of the control beam is in a totally different band than the data beams. Using a different wavelengths allows using simple apparatus, e.g., a wavelength selective coupler (WSC), to extract the control beam from the combined data and control beam.

In a preferred embodiment of the invention, the control beam is transmitted from FEU 36 to MOU 34. Alternatively, control beams are transmitted from MOU 34 to FEU 36 and from FEU 36 to MOU 34. In a preferred embodiment of the invention, the control beam is extracted from the data beam before the data beam is transmitted into the atmosphere. Alternatively or additionally, the control beam passes with the data beam into the atmosphere. In a preferred embodiment of the present invention, a control beam is used to transmit control commands throughout a network between a plurality of FEUs 36 and/or to/from the network manager. Furthermore, the control beam may be used to communicate between the FEUs and one or more LTEs using link 20. Alternatively or additionally, the control beam is the same beam as the above described reference beam which is used for AGC correction and/or for auto-tracking.

In some preferred embodiments of the invention, MOU 34 is located adjacent FEU 36. In these embodiments it is relatively simple to used a dedicated wire or cable connection in order to pass control commands between MOU 34 and FEU 36. In some preferred embodiments of the invention, however, FEU 36 is far away from MOU 34. For example, MOU 34 may be located in a location which is considered unsafe, or otherwise inappropriate for placing FEU 36. Furthermore, it may be advantageous to place FEU 36 near the LTE, e.g., in order to pass control information between the LTE and the FEU, generating the transmitted signal. In these embodiments the use of a control beam in the same fiber used for transferring the data beam is very advantageous.

In some preferred embodiments of the present invention, controller 90 is connected through cables or telephone wires to the network manager. Alternatively or additionally, a cellular or other wireless connection is used to transmit commands to and/or receive feedback from controller 90. Further alternatively or additionally, the commands and/or feedback are transmitted optically within the data beams and/or on separate control beams. In a preferred embodiment of the invention, the reference signals added to the data beam for auto-tracking and/or for AGC, are also used for control communication between transceivers 22A and 22B. Preferably, control data is modulated into the reference beam using AM and/or FM modulation.

Preferably, FEU 36 includes a power source 127, such as a connection to electrical lines. FEU 36 preferably includes a UPS which prevents failure of the transceiver when an electricity failure occurs. Alternatively or additionally, batteries, solar cells and/or any other power source are used, permanently or as a backup in case of failure.

In some preferred embodiments of the present invention, where climate conditions so require, FEU 36 comprises a heater which is used to prevent the temperature within the FEU from going beneath operational temperature levels of the apparatus of the FEU.

Although FEU 36 was described as comprising a pair of amplifiers, namely booster 82 and pre-amplifier 84, more or fewer amplifiers may be used by FEUs 36. For example, a cascade of amplifiers may be used when the transmitted beam suffers from high losses in atmosphere 26. Conversely, in some preferred embodiments of the present invention, only a single amplifier is used: either booster 82, before the beam is transmitted or pre-amplifier 84, after the beam is received. Furthermore, when distance 32 between the transmitter and receiver is very short, in normal conditions about at the order of less than 100 meters, FEUs 36 may not include an amplifier at all.

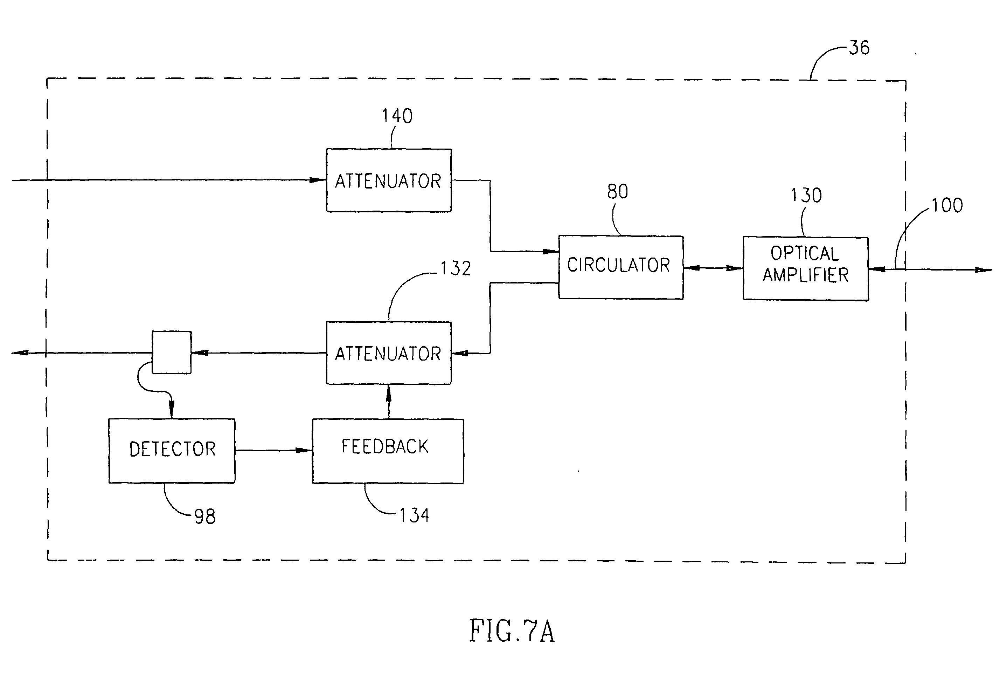

Fig. 7A is a schematic block diagram of the major parts of FEU 36, in accordance with another preferred embodiment of the present invention. In the embodiment of Fig. 7A, a single optical amplifier 130 is used to amplify both the beam being transmitted through atmosphere 26 and the beam received from the atmosphere 26.

In a preferred embodiment of the present invention, AGC is performed by an attenuator 132 with a feedback circuit 134 similar to feedback circuit 122 described above. Preferably, an attenuator 140 is placed on the fiber receiving a beam for transmission from an LTE, in order to prevent amplifier 130 from saturating. Preferably, amplifier 130 has a substantially constant amplification which is suitable to serve both as a booster and a pre-amplifier.

In a preferred embodiment of the invention, attenuator 132 comprises a fiber-coupled acousto-optical modulator such as PN:AMM-55-3.2-170-1550-2FP, available from Brimrose, located in Baltimore, Maryland, US. Alternatively, attenuator 132 comprises an electro absorption attenuator or any other suitable attenuator with an adjustable attenuation level which changes at a rate sufficient for AGC. Attenuator 140 preferably comprises a simple variable attenuator as it does not require a high rate adjustable attenuation level.

Alternatively or additionally to using an attenuator 132 to perform AGC, amplifier 130 comprises an EDFA or other amplifier which performs AGC by its being saturated. Further alternatively or additionally, amplifier 130 performs AGC on both the transmitted and received beam. Preferably in this alternative only one of two opposing transceivers performs AGC. Alternatively, the feedback circuit 134 takes into account that the opposing transceiver is also performing AGC and accordingly performs smaller corrections.

In a preferred embodiment of the invention, FEUs 36 with only a single amplifier are used for atmospheric optical links in which the travel distance 32 in the atmosphere is relatively short. Atmospheric optical links with long travel distances 32 preferably use FEUs 36 with separate boosters 82 and pre-amplifiers 84, which generally provide better amplification.

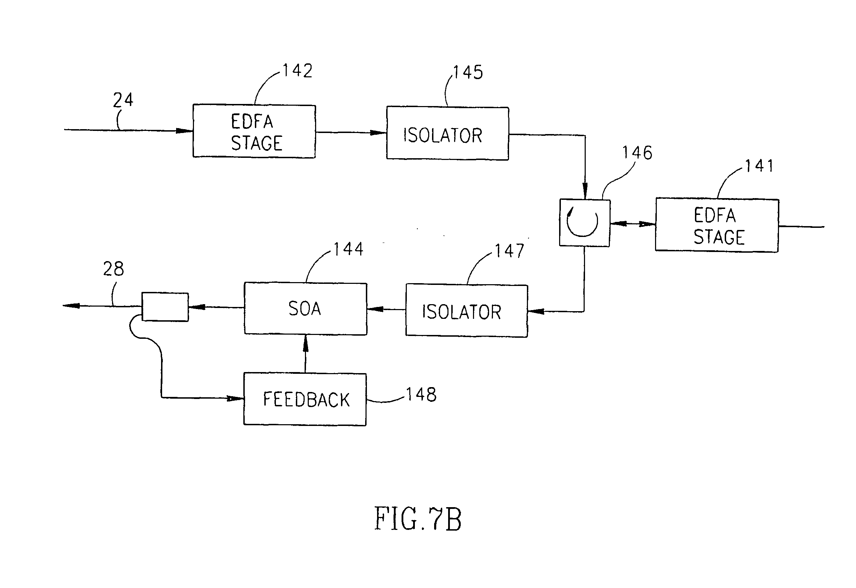

Fig. 7B is a schematic block diagram of the major parts of FEU 36, in accordance with another preferred embodiment of the present invention. In the embodiment of Fig. 7B, the amplification of the transmitted and received beams is performed partially by a common EDFA stage 141 and partially by separate amplifiers, namely an additional EDFA stage 142 for the beam transmitted to the atmosphere and an SOA 144 for the beam received from the atmosphere. An isolator 145 preferably separates between EDFA stages 141 and 142 as is known in the art. Similarly, an isolator 147 preferably separates between EDFA stage 141 and SOA 144. A circulator 146, or a splitter, preferably divides/combines the beam entering EDFA stage 141. Thus, a double stage EDFA performs the task of booster 82 (Fig. 3A) with a resultant high maximal amplification level. The task of pre-amplifier 84 is thus performed by a combination of SOA 144 and EDFA stage 141. The AGC is preferably performed using a feedback circuit 148 around SOA 144, taking advantage of the high rate and high span of change of the amplification provided by the SOA. The resultant noise added to the beam received from the atmosphere is relatively low, as the EDFA stage 141 which has a low noise level precedes SOA 144 and therefore determines the noise level. By using a common EDFA stage 141 for both the transmitted and received beams the cost of the FEU is substantially reduced.

As described above, in some preferred embodiments of the invention, the reference beam travels in the same direction as the data beam on which AGC is performed, and the AGC is performed in the receiver (e.g., 22B in Fig. 5). Alternatively or additionally, the AGC is performed in the transmitter (e.g., 22A in Fig. 5), for example by booster 82. Performing the AGC in the transmitter generally enlarges the dynamic range of the AGC.

In a preferred embodiment of the present invention, the amplification of booster 82 of the transmitter (e.g., 22A in Fig. 5) is adjusted according to the readings of detector 98 and/or 96 in the receiver (e.g., 22B in Fig. 5). Preferably, telephone wires and/or wireless communication (e.g., using modems 114) are used to transmit feedback indications, e.g., the readings of detectors 96 and/or 98 (indicating the power of the data beam or of the reference beam), to a controller (e.g., controller 90 in Fig. 6) of booster 82. Alternatively or additionally, the feedback indications are modulated (using amplitude, frequency, phase and/or other modulation) onto a reference beam transmitted from the receiver to the transmitter. Further alternatively or additionally, the feedback indications are inserted as small packets into the data beam.

Further alternatively or additionally, the amplification of booster 82 is controlled responsive to the power fluctuations of a reference beam or a data beam traveling in an opposite direction, i.e., from the receiver to the transmitter. It is noted that in general, the fluctuations are independent of the direction of the beam.

Atmospheric optical links, according to any of the above described embodiments, are all-optical links in which the data traveling along the link is carried only by light beams and not by any other data carrier. Especially, the light beam transmitted through the link remains in its optical form throughout the link and is not converted into an electrical form, i.e., passed through an electrical regenerator. When a light beam is regenerated, it is actually replaced by another beam, while light beams traveling in an all-optical system remain as the same beam throughout the system. As regenerators are generally complex and expensive, using an all-optical link for transmission through atmosphere 26 simplifies formation of large networks of atmospheric optical links. Furthermore, all-optical links are less wavelength dependent such that they are more versatile and easier to adapt to different wavelengths, data rates, modulation schemes and other characteristics of the beams, if such adaptation is required.

Also, all-optical links may be used with light beams of a relatively wide range of wavelengths, (e.g., 40-50nm), generally limited only by the capabilities of optical amplifiers used. Particularly, all-optical links may be used to transfer light beams formed of beams of a plurality of wavelengths. Thus, when it is desired to transmit a beam with a slightly different wavelength and/or with an additional wavelength, substantially no changes are required in the all optical link 20. These advantages allow production of all-optical transceivers in a large scale without performing changes for each client so that the transceivers be compatible to the apparatus of the client.

It is noted that in many cases, transceivers 22A and 22B are not necessarily next to or associated with LTEs which perform electrical conversion of all the signals carried by the light beam transmitted through the atmosphere. For example, the light beam may be passed to an ADM which optically extracts only a single wavelength which it requires, and the rest of the wavelengths need not be regenerated. In such cases, performing regeneration of all the wavelengths in the beam after the transmission through atmosphere 26, is wasteful.

In some preferred embodiments of the invention, however, electrical regenerators as described, for example in above mentioned U.S. patent 4,960,315 are used instead of, or in addition to, optical amplifiers, e.g., booster 82 and pre-amplifier 84. In some preferred embodiments, electrical regenerators are used in an atmospheric optical link when the link is used to transmit a light beam of specific characteristics for which optical amplifiers are expensive, have insufficient amplification levels, introduce high levels of noise and/or are non existent. Furthermore, light beams of certain wavelengths, e.g., 1310 nm, may not have suitable optical amplifiers and/or may suffer from high attenuation rates in the atmosphere. Therefore, light beams in these wavelengths are preferably converted to more suitable wavelengths before transmission through the atmosphere, and are converted back to the original wavelengths after the transmission through the atmosphere. In a preferred embodiment of the present invention, the wavelength conversion is performed using regeneration. Alternatively, the conversion of the wavelengths is performed optically. In another example, multi-mode light beams may not have optical amplifiers which do not introduce high noise levels. Alternatively or additionally, electrical regenerators are used when distance 32 between transceivers 22 is very large.

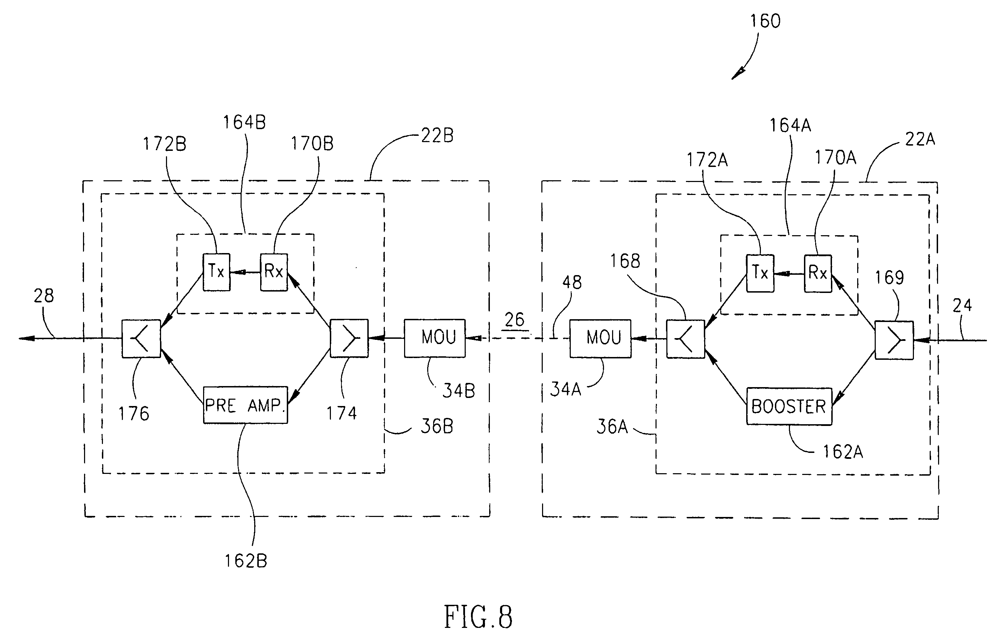

In some preferred embodiments of the present invention, as described below with reference to Fig. 8, FEU 36 comprises a plurality of modules for handling light beams of different characteristics, e.g., wavelengths. Preferably, the modules operate concurrently on components of complex beams. Alternatively or additionally, one or more of the plurality of modules are selected by a network manager according to the characteristics of the light beam handled by the FEU. Further alternatively or additionally, transceivers 22 are modular allowing simple replacement of their FEUs 36 or of one or more modules of the FEUs and/or simple altering of the characteristics of the light beams for which the FEU is configured. In a preferred embodiment of the present invention, the alterations are performed automatically by controller 90 responsive to commands received remotely.

Fig. 8 is a schematic block diagram of an atmospheric optical link 160, in accordance with a preferred embodiment of the present invention. Optical link 160 comprises a transceiver 22A which receives a data-carrying light beam from a transmission optical fiber 24 and transmits the data on a light beam 48 through atmosphere 26. A transceiver 22B receives light beam 48 and passes the data in light beam 48 into a fiber 28. It is noted that optical link 160 may be used for bi-directional beams. The following explanation, however, for simplicity, regards only to light beams transmitted from transceiver 22A to transceiver 22B. Each of transceivers 22A and 22B comprises an MOU 34A and 34B, respectively. MOUs 34A and 34B are preferably suitable for light beams with a wide range of characteristics, such as wavelengths, modulation modes and/or data rates. Transceivers 22A and 22B preferably also comprise standard connections for receiving one of a plurality of different FEUs 36A and 36B. Alternatively or additionally, one or more modules of the FEUs may be replaced, added and/or removed. Preferably, FEUs 36A and 36B placed in transceivers 22A and 22B respectively, are chosen according to the light beam which is passed over optical link 160.

In some preferred embodiments of the invention, FEU 36A comprises a plurality of modules, e.g., 162A and 164A, which perform the tasks of the FEU for different wavelengths or for beams of other different characteristics. Thus, in these embodiments, FEU 36A may be used with a larger range of wavelengths than can be handled by a single optical or electrical amplifier. Preferably, one or more beam diverters direct the light beams through one or more of the modules of FEU 36A.

In a preferred embodiment of the invention, the one or more beam diverters comprise a splitter 169 which divides the beam received by FEU 36A according to its wavelengths, to the modules 162A or 164A at which the various wavelengths are handled, and a combiner 168, which combines the processed beams from the modules, back into a single beam which is passed to MOU 34A for transmission through atmosphere 26. Preferably, splitter 169 and/or combiner 168 are implemented using a wavelength selective coupler (WSC) or a fused coupler. Alternatively or additionally, splitter 169 and/or combiner 168 are implemented using a free space beam splitter and/or a circulator with a wavelength selective mirror.

Alternatively, the one or more beam diverters comprise switches which pass the light beam from fiber 24 to a suitable module, according to the characteristics of the beam. Preferably, a controller of FEU 36A analyzes the received beam and automatically sets the states of the switches to connect one of the modules. Alternatively or additionally, the states of the switches are set responsive to commands from a central control unit of a network including link 160. The commands may be sent using wire or wireless communications or are carried by the light beams passed through link 160.

In a preferred embodiment of the invention, module 162A comprises an optical booster which is useful for one or more wavelengths, for example, for wavelengths in the vicinity of 1550 nm. Module 164A preferably comprises a regenerator formed of a simple optical receiver 170A which converts a light beam into an electrical signal, and a transmitter 172A which generates a light beam from the electrical signal. In a preferred embodiment of the invention, receiver 170A also performs signal verification and/or correction tasks, as are known in the art, on the electrical signal. Module 164A may be used, for example, on light beams with a 1310 nm wavelength. It is noted that transmitter 172A does not necessarily generate a beam of the same wavelength as received by receiver 170A. In some preferred embodiments of the invention, transmitter 172A generates a beam with a different wavelength than of the beam received by receiver 170A, which different wavelength is better suited for transmission through atmosphere 26.

Preferably, FEU 36B in transceiver 22B comprises modules 162B and 164B which respectively process received beams which were prepared for transmission by modules 162A and 164A. Preferably, similar to FEU 36A, FEU 36B comprises a splitter 174 and a combiner 176. Module 162B preferably comprises a pre-amplifier (with accompanying apparatus) as described above with reference to any of Figs. 3-7B. Module 164B preferably comprises a receiver 170B with a wide dynamic range which is suitable for receiving light beams which suffer from turbulence fluctuation effects. Preferably, receiver 170B converts the received beam into an electrical signal and performs AGC correction on the electrical signal. In a preferred embodiment of the invention, receiver 170B also performs amplification and/or verification of the received beam, before and/or after it is converted into an electrical signal. A transmitter 172B preferably converts the electrical signal back into a light beam with a wavelength close to, or identical to, the original beam entering receiver 170A.

In a preferred embodiment of the invention, receivers 170A and 170B are suitable for use with a wide range of wavelengths without changes. Preferably, in order to change the wavelength handled by modules 164A and 164B, only transmitter 172B need be replaced. Alternatively or additionally, changes are performed in the electrical circuits which perform any of the amplification, verification and/or correction.

It is noted that the structure of FEUs 36A and 36B described above were brought by way of example and FEUs with many different structures may be used within transceivers 22A and 22B. Such FEUs include one or more modules for various wavelengths. The modules may be all optical modules, such as modules 162A and 162B, or may perform conversion to electrical signals as modules 164A and 164B. It is further noted that FEUs 36A and 36B do not necessarily include the same number of modules or respective types of modules for the same wavelengths. For example, one of FEUs 36A and 36B may have a single all optical module for a plurality of wavelengths while the other FEU has a plurality of modules which handle each wavelength separately.

In a preferred embodiment of the invention, transceivers 22A and 22B are modular and are easily upgraded. For example, a user may purchase, at first, a pair of FEUs 36A and 36B suitable for handling a light beam of a single wavelength. Such FEUs are preferably available for light beams of various wavelengths, including wavelengths in the band of 1310 and 1550 nm. When the user needs to transmit additional bandwidth through an atmospheric link, the user may add to FEUs 36A and 36B additional modules or may replace the modules with modules useful for a plurality of wavelengths, e.g., modules 162A and 162B.

In a preferred embodiment of the present invention, the modules of a multi-module FEU are used concurrently in order to achieve a higher transmission bandwidth. Alternatively, at any specific time only a sub group of the modules is used. Preferably, the sub-group of modules is chosen according to one or more characteristics of the light beam transmitted through the atmosphere.

Alternatively or additionally, the modules are chosen according to weather conditions in order to achieve the highest bandwidth transmission given the atmospheric conditions. For example, in a preferred embodiment, a first module comprises a fast receiver which can be used with beams carrying very high data rates and a second module includes a slow receiver with a higher sensitivity which can be used with only low data rate beams. In normal weather conditions the module with the fast receiver is preferably used. When the beam is not properly received, for example due to weather conditions, the LTE generating the beam is preferably requested to lower the data rate or information rate of the beam and the slow and more sensitive receiver is used. In a further example, a third module uses all-optical apparatus for transmission of a beam which carries data on a plurality of separate wavelengths. When the weather conditions do not allow transmission using all optical apparatus, the LTE is preferably requested to transmit a beam with only one wavelength and either the first or second module is used.

In a preferred embodiment of the present invention, FEU 36 and/or a network manager comprises weather sensors which provide indication of the weather conditions. Alternatively or additionally, the weather conditions are determined from the quality of a light beam transmitted through the atmosphere. Further alternatively or additionally, the network manager receives a weather forecast and adjusts accordingly. Thus, changes may be mode in the transmitted beam without waiting until the beam deteriorates and the transmission is interrupted.

It is noted that in some preferred embodiments of the invention, for example, for single direction transmission over short distances, FEUs 36A and/or 36B are not required. Rather, fibers 24 and 28 connect directly to fibers 30 of MOUs 34A and 34B, possibly through optical isolators, circulators and/or couplers.

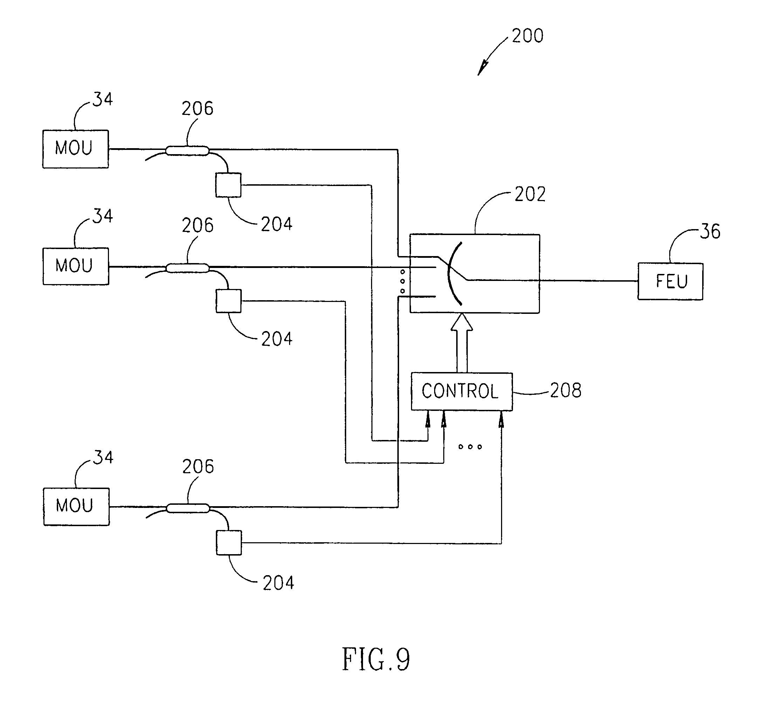

Fig. 9 is a schematic block diagram of a receiver 200 of an atmospheric optical link, in accordance with a preferred embodiment of the present invention. Receiver 200 comprises a plurality of MOUs 34 for receiving optical beams from the atmosphere. Preferably, MOUs 34 are used in parallel to receive one or more light beams carrying identical data. Thus, if the line of sight from one of MOUs 34 is momentarily blocked, the data is nonetheless received by receiver 200.

In a preferred embodiment of the present invention, receiver 200 comprises a switch 202 which selectively connects the output from one of MOUs 34 to an FEU 36. Preferably, each MOU 34 comprises a respective photo detector 204 which determines the power of the beam received by the MOU. Preferably, respective couplers 206 provide a small fraction of the light beam from MOUs 34 to detectors 204. A control unit 208 preferably receives indications from detectors 204 and determines which MOU 34 is to be connected by switch 202 to FEU 36, e.g., which MOU provides a light beam with the most power. Switch 202 preferably comprises a fast optical switch, for example with a switching speed of 100 microseconds, such as the box switch manufactured by Akzo Nobel Beam from the Netherlands. In other preferred embodiments, slower and/or faster switches are used.

In a preferred embodiment of the present invention, the signals received by MOUs 34 originate from a single transmitting MOU (not shown). As the face area of the transmitted beam enlarges in atmosphere 26 due to beam divergence, each MOU 34 receives only a small fraction of the power of the transmitted beam. Using a plurality of receiving MOUs 34 in a single receiver 200, increases the chances of one of the MOUs 34 receiving a beam with sufficient power to extract the data carried by the beam. Preferably, MOUs 34 are relatively close to each other (e.g., a separation of 0-10 centimeters between adjacent collimators 40 (Fig. 2)) such that all the collimators are located within the face area of the transmitted beam.

Alternatively or additionally, some or all of MOUs 34 receive separate beams from separate sources which transmit light beams through the atmosphere. In a preferred embodiment of the invention, each MOU 34 of receiver 200 receives a separate beam from a respective MOU in a multiple-MOU transmitter. In a preferred embodiment of the invention, the separate beams are non-overlapping in the vicinity of receiver 200. Alternatively or additionally, the beams do not overlap in the vicinity of a transmitter from which they are transmitted. Preferably, the MOUs transmit coherent beams which originate from a single light beam which is split for transmission. Alternatively, the MOUs transmit non-coherent beams generated separately from electrical signals. Further alternatively, at least some of the separate beams are generated from a single beam using free-space optical apparatus, such as mirrors and/or optical beam splitters. Further alternatively or additionally, the separate beams have different polarization components. Preferably, the polarization components of the separate beams are mutually orthogonal. In a preferred embodiment of the present invention, two beams with orthogonal polarization components are transmitted.

In some preferred embodiments of the present invention, MOUs 34 are sufficiently distanced from each other such that an object (e.g., birds, kites) blocking one of the beams does not block the other beams. In a preferred embodiment of the present invention, the distance between each two collimators 40 of MOUs 34 is larger than 50 centimeters, more preferably larger than 1 meter. It is noted that a bird passing through the path of a light beam received by receiver 200 generally blocks the light beam for about 0.1 second, while the compensating switching is performed at the speed of switch 202 which is preferably less than 100 microseconds. Although with such a switching time some data may be lost, the receiver and transmitter do not lose their mutual coordination as normally happens when the transmission is interrupted for more than a predetermined standard time, usually between 10-100 milliseconds.

In a preferred embodiment of the present invention, MOUs 34 are organized in a horizontal or vertical array. Alternatively or additionally, MOUs 34 are organized in an arrangement which minimizes the chances that the light path to all the MOUs will be blocked simultaneously. For example, MOUs 34 may be arranged diagonally or circularly. It is further noted that MOUs 34 are not necessarily arranged on a common plane. Furthermore, an array of MOUs may include different types of MOUs. Preferably, each of the MOUs in the array may be used for transmission, reception or both.

Although the above description shows switch 202 as being located between MOUs 34 and a single FEU 36, switch 202 may be located at substantially any other position within receiver 200. Specifically, each MOU 34 may have a respective unit which performs some or all of the tasks of FEU 36 (e.g., amplification, AGC correction, conversion to electrical signals) before the switching.

Alternatively or additionally to using switch 202 and control unit 208 to select a beam from one of MOUs 34, receiver 200 comprises a combiner which combines the beams from some or all of the MOUs. In a preferred embodiment of the invention, the beams are combined optically. The beams are preferably non-coherent beams so that the beams do not interfere with each other when they are combined. Alternatively or additionally, the number of MOUs 34 included in receiver 200 is large, i.e., more than 6, more preferably, more than 10, 15 or 20 in order to limit the extent of the interference. Further alternatively or additionally, each MOU 34 comprises a polarizer which provides a beam with a different polarization than the other beams. Preferably, the beams from the different MOUs 34 have polarizations which are mutually orthogonal.

In some preferred embodiments of the present invention, receiver 200 serves also as a transmitter. In a preferred embodiment of the present invention, the MOU 34 selected by switch 202 handles a bi-directional beam as described above with reference to Figs. 1-2. Alternatively, a single one of MOUs 34 serves as a transmitting MOU regardless of whether the MOU is currently connected through switch 202 to FEU 36. Further alternatively, a separate transmitting MOU (not shown) only for transmission and MOUs 34 are used only to receive light beams. Further alternatively, a plurality of MOUs 34, e.g., all of the MOUs, are used for transmission.

Preferably, MOUs 34 are mounted on separate bases 44 and are independently adjusted. Alternatively or additionally, some or all of MOUs 34 are mounted on a single base 44 and their positions are adjusted together.

In a preferred embodiment of the present invention, receiver 200 may be used alternatively for receiving a plurality of beams carrying different data or for receiving one or more beams carrying the same data by a plurality of MOUs 34. Preferably, when the atmosphere causes relatively small fluctuations, the plurality of receivers are used with a plurality of transmitters which transmit beams carrying different data, achieving a high bandwidth transmission. However, when the atmosphere causes large fluctuations, the MOUs are preferably used together with a single transmitter, to minimize the fluctuations, achieving a lower bandwidth transmission.

In some preferred embodiments of the present invention, the connections between MOU 34 and FEU 36 are optically wireless rather than using a fiber. It is noted that for short distances the apparatus required for such transmission is much simpler than for hundreds of meters.

Using the apparatus described above, metropolitan networks including a plurality of atmospheric optical links are relatively simple to produce. Such networks may include substantially only atmospheric links or may be hybrid networks which are partially formed of fibers. Using atmospheric links is especially advantageous in metropolitan areas where the cost of laying optical fibers and other wires is relatively high. Atmospheric optical links may be used to transfer data also inside buildings. Thus there is no need to have cables lying on the floors of the building and/or make holes in walls to pass the wires. It is noted that within buildings the transmission distances are short and there is substantially no turbulation. Therefore, links within buildings are preferably implemented without amplifiers and/or AGC correction.

Fig. 10 is a schematic illustration of an optical network 230, in accordance with a preferred embodiment of the present invention. Network 230 preferably is used to distribute one or more data-carrying light beams throughout a given area. Network 230 preferably comprises a plurality of transceivers 22 (marked 22A, 22B, etc.) which transmit and/or receive data-carrying light beams through the atmosphere. In a preferred embodiment of the present invention, one or more mirrors 234 are used in passing the light beam between transceivers 22 which cannot establish a direct optical path between them, for example, due to an intervening building 236. Mirrors may also be used within buildings, for example to bring a light beam from an MOU 34 located within a building to a point out of the building from which the beam may be transmitted.

In a preferred embodiment of the present invention, when the distance between two transceivers 22A and 22B is too large, a pair of back to back transceivers 22C and 22D may be used to allow transmission between the distanced transceivers. In some preferred embodiments of the present invention, back to back transceivers are used to go around obstacles. Back to back transceivers 22C and 22D may be adjacent each other or may be connected by a short or long fiber. For example, back to back transceiver may receive a beam from one window of a building and transmit the beam through another window.

In some preferred embodiments of the present invention, network 230 also includes one or more fibers 232 which are used to pass the one or more light beams over some of the area of the network. A plurality of add and drop multiplexers (ADMs) 238, or other LTEs, serve as interfaces to network 230. For example, in order to transmit data from a public switch 240 to a client 242, the data is encoded into a light beam of a dedicated bandwidth and added at ADM 238A to the light beam passed throughout network 230. At an ADM 238B serving client 242 the light beam of the dedicated bandwidth is removed from the light beam of network 230 and is passed to the client which extracts the data therefrom.

Preferably, network 230 has an adjustable topology. The topology is preferably adjusted by moving the bases 44 of the MOUs 34 of transceivers 22, as described above with reference to Fig. 2. In a preferred embodiment of the invention, the topology of network 230 is adjusted according to bandwidth considerations. For example, transceivers 22E and 22F may pass the beam either over paths 242E and 242F or over paths 250. The topology is preferably adjusted according to commands sent from an automatic network manager to the transceivers 22. Preferably, the selection of the path is performed based on the bandwidth needs of clients 246 and 248. In an exemplary embodiment, network 230 is used as a backup network and/or as a supplementary network.

Alternatively or additionally, the topology of network 230 is adjusted according to weather conditions. For example, path 242A may be relatively long such that it may be used only on days with good visibility. On other days paths 244 are preferably used instead.

In a preferred embodiment of the present invention, transceivers 22 are all optical transceivers which do not perform conversion of light beams to electrical signals. Therefore, transceivers 22 do not require separate amplifiers for each wavelength carried by network 230. Also, substantially no changes are required in all optical transceivers in order to add wavelengths to the light beam of the network or to change a wavelength.

It is noted that although operating FEU 36 using single-mode apparatus and providing single-mode beams from the FEU (i.e., through fiber 28) is advantageous, some of the embodiments of the present invention may be carried out with a multi-mode FEU 36. For example, networks formed at least partially from multi-mode fibers and/or networks in which regenerators are used, may employ multi-mode FEUs 36. In these embodiments, fiber 30 which receives the light beam from the atmosphere is preferably a multi-mode fiber.

It is noted that although many of the above described embodiments are directed primarily to transmission of data carrying data beams of high data rates, through outdoor atmosphere conditions over substantial distances, the principles of some of the above described embodiments are applicable also to other modes of transmission. Specifically, some of the above described embodiments may be implemented in indoor environments, for short distance transmissions and/or for beams carrying data at low data rates.

It is further noted that the data carrying light beams handled in preferred embodiments of the present invention may carry substantially any form of data, including, for example, computer data packets, telephone conversations and video broadcasting.

It is further noted that although the transmission apparatus described above was described as being distributed between MOU 34 and FEU 36, it will be understood that the apparatus may be included in a single combined unit and/or may be divided between substantially any number of units in any suitable division.

It will be appreciated that the above described methods may be varied in many ways, including, changing the order of steps, and the exact implementation used. It should also be appreciated that the above described description of methods and apparatus are to be interpreted as including apparatus for carrying out the methods and methods of using the apparatus.

The present invention has been described using non-limiting detailed descriptions of preferred embodiments thereof that are provided by way of example and are not intended to limit the scope of the invention. It should be understood that features described with respect to one embodiment may be used with other embodiments and that not all embodiments of the invention have all of the features shown in a particular figure. Variations of embodiments described will occur to persons of the art. Furthermore, the terms "comprise," "include," "have" and their conjugates, shall mean, when used in the claims, "including but not necessarily limited to." The scope of the invention is limited only by the following claims:

**EP 1 166 469 B1**

**Claims**

1. A method of transferring a data-carrying light beam, comprising:

transmitting the data-carrying light beam through the atmosphere (26);
directing a received beam including at least a portion of the transmitted beam into at least one fiber (28,100); and
changing the amplitude of the received beam directed into the at least one fiber (28, 100), using optical apparatus (84, 132) in order to implement optical AGC;

**characterized in that**:

changing the amplitude comprises changing, by a variable amplification or attenuation,

wherein at least some of the amplitude changes comprise attenuations.

2. A method according to claim 1, wherein changing the amplitude comprises changing by a factor determined responsive to an extent to which the received beam was affected by the atmosphere (26).

3. A method according to claim 1 or claim 2, wherein changing the amplitude comprises changing by a factor determined responsive to an average power level of the received beam.

4. A method according to any of the preceding claims, comprising determining the momentary power of the received beam and wherein changing the amplitude of the received beam comprises changing the amplitude by a factor determined responsive to the determined momentary power of the received beam.

5. A method according to claim 4, wherein determining the momentary power of the received beam comprises passing a portion of the received beam to a light detector (98) after its amplitude is variably changed.

6. A method according to any of the preceding claims, wherein changing the amplitude comprises providing, at an output of the optical apparatus (84, 132), a light beam with a substantially constant power.

7. A method according to any of the preceding claims, wherein changing the amplitude comprises amplifying or attenuating by an optical amplifier (84).

8. A method according to any of the preceding claims, wherein changing the amplitude comprises attenuating by an optical attenuator (132).

9. A method according to any of the preceding claims, comprising additionally passing the received beam through an additional optical apparatus (130) which amplifies the amplitude of the received beam by a constant gain.

10. A method according to any of the preceding claims, wherein transmitting the light beam through the atmosphere (26) comprises transmitting outdoors.

11. A method according to any of the preceding claims, wherein transmitting the light beam through the atmosphere comprises transmitting over a distance of at least 100 meters.

12. A method according to any of the preceding claims, wherein changing the amplitude by optical apparatus (84, 132) comprises changing by optical apparatus having a variable amplification or attenuation with a dynamic range of at least about 30dB.

13. A method according to any of the preceding claims, wherein the data-carrying light beam carries data in a plurality of distinct wavelengths.

14. A method according to claim 13, wherein changing the amplitude comprises providing, at an output of the optical apparatus (84, 132), a light beam in which each of the wavelengths has a substantially constant power.

15. A method according to any of the preceding claims, wherein directing a received beam into at least one fiber (100) comprises directing the received beam into a single mode fiber.

16. A method according to any of the preceding claims, wherein the optical apparatus (84, 132) has a high amplification or attenuation variation rate, suitable for automatic gain control (AGC) of the beam received from the atmosphere (26).

17. A method according to claim 16, wherein the amplification or attenuation of the optical apparatus (84, 132) has a variation rate higher than 1 kHz.

18. A method according to any of the preceding claims, wherein the optical apparatus (84, 132) is effectively operative over a bandwidth of at least 40 nm.

19. A method according to any of the preceding claims, comprising retransmitting the received beam after changing its amplitude, without regenerating the beam.

20. A method according to any of the preceding claims, wherein changing the amplitude comprises changing so as to compensate for power fluctuations introduced into the light beam by atmospheric turbulence, in being transmitted through the atmosphere.

21. An optical wireless transceiver (22), comprising:

at least one fiber (100) adapted to receive a data-carrying light beam from the atmosphere (26);

an optical amplitude modifier (84), coupled to the at least one fiber (100) so as to receive the data-carrying light beam therefrom, adapted to change the amplitude of the received light beam, in order to implement optical AGC **characterized in that**:

the optical amplitude modifier is adapted to change the amplitude by a variable amplification or attenuation, wherein at least some of the amplitude changes comprise attenuations.

22. A transceiver according to claim 21, wherein the optical amplitude modifier (84, 132) is adapted to process light beams carrying data in a plurality of distinct wavelengths.

23. A transceiver according to claim 22, wherein the optical amplitude modifier (84, 132) provides a light beam in which at least one of the wavelengths has a substantially constant power.

24. A transceiver according to claim 23, wherein the optical amplitude modifier (84, 132) provides a light beam in which each of the wavelengths has a substantially constant power.

25. A transceiver according to any of claims 21-24, wherein the optical amplitude modifier (84, 132) comprises an attenuator.


**Patentansprüche**

1. Verfahren zur Übertragung eines datentragenden Lichtstrahls, umfassend:

Senden des datentragenden Lichtstrahls durch die Atmosphäre (26);
Leiten eines empfangenen Strahls einschließlich mindestens eines Teils des gesendeten Strahls in mindestens eine Faser (28, 100); und
Ändern der Amplitude des empfangenen Strahls, der in die mindestens eine Faser (28, 100) geleitet ist, unter Verwendung einer optischen Vorrichtung (84, 132), um eine optische AGC auszuführen;

   **dadurch gekennzeichnet, dass**:

ein Ändern der Amplitude ein Ändern durch eine variable Verstärkung oder Dämpfung umfasst, wobei mindestens einige der Amplitudenänderungen Dämpfungen umfassen.

2. Verfahren nach Anspruch 1, bei dem ein Ändern der Amplitude umfasst: Ändern um einen Faktor, der ansprechend auf ein Maß bestimmt wird, bis zu dem der empfangene Strahl durch die Atmosphäre (26) beeinträchtigt wurde.

3. Verfahren nach Anspruch 1 oder Anspruch 2, bei dem ein Ändern der Amplitude umfasst: Ändern um einen Faktor, der ansprechend auf einen mittleren Leistungspegel des empfangenen Strahls bestimmt wird.

4. Verfahren nach einem der vorangehenden Ansprüche, umfassend ein Bestimmen der momentanen Leistung des empfangenen Strahls und wobei ein Ändern der Amplitude des empfangenen Strahls umfasst: Ändern der Amplitude um einen Faktor, der ansprechend auf die bestimmte momentane Leistung des empfangenen Strahls bestimmt wird.

5. Verfahren nach Anspruch 4, bei dem ein Bestimmen der momentanen Leistung des empfangenen Strahls umfasst: Weiterleiten eines Teils des empfangenen Strahls zu einem Lichtdetektor (98), nachdem seine Amplitude variabel geändert ist.

6. Verfahren nach einem der vorangehenden Ansprüche, bei dem ein Ändern der Amplitude umfasst: Bereitstellen eines Lichtstrahls mit einer im Wesentlichen konstanten Leistung an einem Ausgang der optischen Vorrichtung (84, 132).

7. Verfahren nach einem der vorangehenden Ansprüche, bei dem ein Ändern der Amplitude umfasst: Verstärken oder Dämpfen durch einen optischen Verstärker (84).

8. Verfahren nach einem der vorangehenden Ansprüche, bei dem ein Ändern der Amplitude umfasst: Dämpfen durch ein optisches Dämpfungsglied (132).

9. Verfahren nach einem der vorangehenden Ansprüche, umfassend: zusätzliches Weiterleiten des empfangenen Strahls durch eine zusätzliche optische Vorrichtung (130), die die Amplitude des empfangenen Strahls um eine konstante Verstärkung verstärkt.

10. Verfahren nach einem der vorangehenden Ansprüche, bei dem ein Senden des Lichtstrahls durch die Atmosphäre (26) ein Senden im Freien umfasst.

11. Verfahren nach einem der vorangehenden Ansprüche, bei dem ein Senden des Lichtstrahls durch die Atmosphäre ein Senden über eine Entfernung von mindestens 100 Metern umfasst.

12. Verfahren nach einem der vorangehenden Ansprüche, bei dem ein Ändern der Amplitude durch eine optische Vorrichtung (84, 132) umfasst: Ändern durch eine optische Vorrichtung mit einer variablen Verstärkung oder Dämpfung mit einem dynamischen Bereich von mindestens etwa 30 dB.

13. Verfahren nach einem der vorangehenden Ansprüche, bei dem der datentragende Lichtstrahl Daten in einer Mehrzahl von untereinander verschiedenen Wellenlängen trägt.

14. Verfahren nach Anspruch 13, bei dem ein Ändern der Amplitude umfasst: Bereitstellen eines Lichtstrahls, bei dem jede der Wellenlängen eine im Wesentlichen konstante Leistung aufweist, an einem Ausgang der optischen Vorrichtung (84, 132).

15. Verfahren nach einem der vorangehenden Ansprüche, bei dem ein Leiten eines empfangenen Strahls in mindestens eine Faser (100) umfasst: Leiten des empfangenen Strahls in eine Einmodenfaser.

16. Verfahren nach einem der vorangehenden Ansprüche, bei dem die optische Vorrichtung (84, 132) eine hohe Verstärkungs- oder Dämpfungs-Veränderungsgeschwindigkeit aufweist, die zur automatischen Verstärkungsregelung (AGC) des Strahls geeignet ist, der aus der Atmosphäre (26) empfangen wird.

17. Verfahren nach Anspruch 16, bei dem die Verstärkung oder Dämpfung der optischen Vorrichtung (84, 132) eine Veränderungsgeschwindigkeit aufweist, die höher als 1 kHz ist.

18. Verfahren nach einem der vorangehenden Ansprüche, bei dem die optische Vorrichtung (84, 132) über eine Bandbreite von mindestens 40 nm wirkungsvoll betriebsfähig ist.

**19.** Verfahren nach einem der vorangehenden Ansprüche, umfassend: erneutes Senden des empfangenen Strahls nach Ändern seiner Amplitude, ohne den Strahl zu regenerieren.

**20.** Verfahren nach einem der vorangehenden Ansprüche, bei dem ein Ändern der Amplitude umfasst: Ändern, um Leistungsschwankungen zu kompensieren, die durch atmosphärische Turbulenz in den Lichtstrahl eingeführt werden, während er durch die Atmosphäre gesendet wird.

**21.** Optischer drahtloser Transceiver (22), umfassend:

mindestens eine Faser (100), die angepasst ist, um einen datentragenden Lichtstrahl aus der Atmosphäre (26) zu empfangen;
eine optische Amplitudenmodifiziervorrichtung (84), die mit der mindestens einen Faser (100) gekoppelt ist, um den datentragenden Lichtstrahl davon zu empfangen, die angepasst ist, um die Amplitude des empfangenen Lichtstrahls zu ändern, um eine optische AGC auszuführen, **dadurch gekennzeichnet, dass**:

die optische Amplitudenmodifiziervorrichtung angepasst ist, um die Amplitude durch eine variable Verstärkung oder Dämpfung zu ändern, wobei mindestens einige der Amplitudenänderungen Dämpfungen umfassen.

**22.** Transceiver nach Anspruch 21, bei dem die optische Amplitudenmodifiziervorrichtung (84, 132) angepasst ist, um Lichtstrahlen, die Daten tragen, in einer Mehrzahl von voneinander verschiedenen Wellenlänge zu verarbeiten.

**23.** Transceiver nach Anspruch 22, bei dem die optische Amplitudenmodifiziervorrichtung (84, 132) einen Lichtstrahl bereitstellt, bei dem mindestens eine von den Wellenlängen eine im Wesentlichen konstante Leistung aufweist.

**24.** Transceiver nach Anspruch 23, bei dem die optische Amplitudenmodifiziervorrichtung (84, 132) einen Lichtstrahl bereitstellt, bei dem jede der Wellenlängen eine im Wesentlichen konstante Leistung aufweist.

**25.** Transceiver nach einem der Ansprüche 21-24, bei dem die optische Amplitudenmodifiziervorrichtung (84, 132) ein Dämpfungsglied umfasst.


**Revendications**

**1.** Procédé de transfert d'un faisceau lumineux porteur de données, comprenant :

la transmission du faisceau lumineux porteur de données à travers l'atmosphère (26) ;
la direction d'un faisceau reçu comprenant au moins une partie du faisceau transmis dans au moins une fibre (28, 100) ; et
le changement d'amplitude du faisceau reçu dirigé dans la au moins une fibre (28, 100), en utilisant un dispositif optique (84, 132) afin de mettre en oeuvre une commande automatique de gain optique ;

**caractérisé en ce que** :

le changement de l'amplitude comprend un changement, au moyen d'une amplification ou atténuation variable, au moins certains des changements d'amplitude comprenant des atténuations.

**2.** Procédé selon la revendication 1, dans lequel le changement de l'amplitude comprend un changement par un facteur déterminé en fonction d'une mesure dans laquelle le faisceau reçu a été affecté par l'atmosphère (26).

**3.** Procédé selon la revendication 1 ou la revendication 2, dans lequel le changement de l'amplitude comprend un changement par un facteur déterminé en fonction d'un niveau de puissance moyen du faisceau reçu.

**4.** Procédé selon l'une quelconque des revendications précédentes, comprenant la détermination de la puissance instantanée du faisceau reçu et le changement de l'amplitude du faisceau reçu comprenant un changement de l'amplitude par un facteur déterminé en fonction de la puissance instantanée déterminée du faisceau reçu.

**5.** Procédé selon la revendication 4, dans lequel la détermination de la puissance instantanée du faisceau reçu comprend un passage d'une partie du faisceau reçu dans un détecteur de lumière (98) une fois que son amplitude est modifiée de façon variable.

6. Procédé selon l'une quelconque des revendications précédentes, dans lequel le changement de l'amplitude comprend la fourniture, à une sortie du dispositif optique (84, 132), d'un faisceau lumineux avec une puissance sensiblement constante.

7. Procédé selon l'une quelconque des revendications précédentes, dans lequel le changement de l'amplitude comprend une amplification ou une atténuation par un amplificateur optique (84).

8. Procédé selon l'une quelconque des revendications précédentes, dans lequel le changement de l'amplitude comprend une atténuation par un atténuateur optique (132).

9. Procédé selon l'une quelconque des revendications précédentes, comprenant en outre le passage du faisceau reçu à travers un autre dispositif optique (130) qui amplifie l'amplitude du faisceau reçu par un gain constant.

10. Procédé selon l'une quelconque des revendications précédentes, dans lequel la transmission du faisceau lumineux à travers l'atmosphère (26) comprend une transmission à l'extérieur.

11. Procédé selon l'une quelconque des revendications précédentes, dans lequel la transmission du faisceau lumineux à travers l'atmosphère comprend une transmission sur une distance d'au moins 100 mètres.

12. Procédé selon l'une quelconque des revendications précédentes, dans lequel le changement de l'amplitude par un dispositif optique (84, 132) comprend un changement par un dispositif optique ayant une amplification ou atténuation variable avec une plage dynamique d'au moins 30 dB environ.

13. Procédé selon l'une quelconque des revendications précédentes, dans lequel le faisceau lumineux porteur de données porte des données dans une pluralité de longueurs d'onde distinctes.

14. Procédé selon la revendication 13, dans lequel le changement de l'amplitude comprend la fourniture, à une sortie du dispositif optique (84, 132), d'un faisceau lumineux dans lequel chacune des longueurs d'onde a une puissance sensiblement constante.

15. Procédé selon l'une quelconque des revendications précédentes, dans lequel la direction d'un faisceau reçu dans au moins une fibre (100) comprend une direction du faisceau reçu dans une fibre monomode.

16. Procédé selon l'une quelconque des revendications précédentes, dans lequel le dispositif optique (84, 132) a une fort taux de variation d'amplification ou d'atténuation, adapté à une commande automatique de gain (CAG) du faisceau reçu depuis l'atmosphère (26).

17. Procédé selon la revendication 16, dans lequel l'amplification ou l'atténuation du dispositif optique (84, 132) a un taux de variation supérieur à 1 kHz.

18. Procédé selon l'une quelconque des revendications précédentes, dans lequel le dispositif optique (84, 132) fonctionne de façon efficace sur une largeur de bande d'au moins 40 nm.

19. Procédé selon l'une quelconque des revendications précédentes, comprenant la retransmission du faisceau reçu après changement de son amplitude, sans régénération du faisceau.

20. Procédé selon l'une quelconque des revendications précédentes, dans lequel le changement de l'amplitude comprend un changement apte à compenser les fluctuations de puissance introduites dans le faisceau lumineux par la turbulence atmosphérique, lorsqu'il est transmis à travers l'atmosphère.

21. Emetteur-récepteur optique sans fil (22), comprenant :

> au moins une fibre (100) adaptée pour recevoir un faisceau lumineux porteur de données depuis l'atmosphère (26) ;
> un modificateur d'amplitude optique (84), couplé à l'au moins une fibre (100) de façon à recevoir le faisceau lumineux porteur de données provenant de celle-ci, adapté pour modifier l'amplitude du faisceau lumineux reçu afin de mettre en oeuvre une commande automatique de gain optique, **caractérisé en ce que** :

le modificateur d'amplitude optique est adapté pour modifier l'amplitude par une amplification ou atténuation variable, au moins certains des changements d'amplitude comprenant des atténuations.

22. Emetteur-récepteur selon la revendication 21, dans lequel le modificateur d'amplitude optique (84, 132) est adapté pour traiter des faisceaux lumineux porteurs de données dans une pluralité de longueurs d'onde distinctes.

23. Emetteur-récepteur selon la revendication 22, dans lequel le modificateur d'amplitude optique (84, 132) fournit un faisceau lumineux dans lequel au moins une des longueurs d'onde a une puissance sensiblement constante.

24. Emetteur-récepteur selon la revendication 23, dans lequel le modificateur d'amplitude optique (84, 132) fournit un faisceau lumineux dans lequel chacune des longueurs d'onde a une puissance sensiblement constante.

25. Emetteur-récepteur selon l'une quelconque des revendications 21 à 24, dans lequel le modificateur d'amplitude optique (84, 132) comprend un atténuateur.

FIG.1

FIG.2

EP 1 166 469 B1

82

24

BOOSTER

36

80

CIRCULATOR

100

84

28

PRE AMPLIFIER

FIG.3A

53

POWER

t

FIG.3B

FIG.4

EP 1 166 469 B1

EP 1 166 469 B1

FIG.5

FIG.6

EP 1 166 469 B1

FIG.7A

EP 1 166 469 B1

FIG.7B

FIG.8

EP 1 166 469 B1

FIG.9

FIG.10

EP 1 166 469 B1